# EUROPEAN PATENT APPLICATION

(11) **EP 4 383 899 A1**
(43) Date of publication of application: **12.06.2024**
(21) Application number: 22863282.4
(22) Date of filing: 25.08.2022
(51) Int. Cl.: H04W 72/04

(54) **FREQUENCY DOMAIN RESOURCE CONFIGURATION METHOD AND RELATED APPARATUS**

(30) Priority: 31.08.2021 CN 202111015469
(71) Applicant: Huawei Technologies Co., Ltd., Shenzhen, Guangdong 518129 (CN)
(72) Inventor: ZHAO, Wei, Shenzhen, Guangdong 518129 (CN); MAO, Tianyu, Shenzhen, Guangdong 518129 (CN); XIE, Bo, Shenzhen, Guangdong 518129 (CN)
(74) Representative: Epping - Hermann - Fischer
(86) International application number: PCT/CN2022/114662
(87) International publication number: WO 2023/030144

(57) **Abstract**

Embodiments of this application provide a frequency domain resource configuration method and a related apparatus. In this solution, an access network device configures a first frequency domain resource for a physical downlink shared channel PDSCH, and the first frequency domain resource occupies a part of an available bandwidth of the access network device. The access network device adjusts a bandwidth of a second frequency domain resource based on physical resource block utilization of a cell and/or an amount of downlink data of a terminal device in the cell, where the second frequency domain resource is a frequency domain resource available to the cell for transmitting downlink information, and the second frequency domain resource at least partially overlaps the first frequency domain resource. The access network device configures the cell with the second frequency domain resource for transmitting the downlink information without needing the terminal device to report a capability, to expand an application scope of the access network device, add a type of the terminal device supported by the access network device, and effectively reduce energy consumption of the terminal device and the access network device.

## Description

This application claims priority to Chinese Patent Application No. 202111015469.9, filed with the China National Intellectual Property Administration on August 31, 2021 and entitled "FREQUENCY DOMAIN RESOURCE CONFIGURATION METHOD AND RELATED APPARATUS", which is incorporated herein by reference in its entirety.

### TECHNICAL FIELD

This application relates to the field of communication technologies, and in particular, to a frequency domain resource configuration method and a related apparatus.

### BACKGROUND

The fifth-generation new radio (5G new radio, 5G NR) technology supports a large bandwidth. However, it can be learned from a statistical result that average physical resource block (physical resource block, PRB) utilization of an access network device using 5G NR is not high. In other words, generally, a network load is relatively low, and a terminal device does not need to use a larger bandwidth, causing a waste of network resources.

For different cells of a same access network device, an actual channel status of a physical downlink shared channel (physical downlink shared channel, PDSCH) of each cell does not match a reference signal-based measurement result of the cell. Consequently, communication quality is reduced, and user service experience is affected.

### SUMMARY

According to a first aspect, an embodiment of this application provides a frequency domain resource configuration method, including: An access network device configures a first frequency domain resource for a physical downlink shared channel PDSCH of a cell, where the first frequency domain resource occupies a part of an available bandwidth of the access network device; and the access network device configures a second frequency domain resource for the cell, where the second frequency domain resource is a frequency domain resource available to the cell for transmitting downlink information, and occupies a part of the available bandwidth of the access network device, and the second frequency domain resource at least partially overlaps the first frequency domain resource.

The downlink information in embodiments of this application is information, a signal, data, a packet, signaling, or the like sent by the access network device to a terminal device. Alternatively, the downlink information may be a channel carrying the foregoing information, signal, data, packet, or signaling. This is not limited in embodiments of this application. For example, the downlink information may be a reference signal, for example, a channel state information reference signal (channel state information reference signal, CSI-RS) or a tracking reference signal (tracking reference signal, TRS). In another example, the downlink information may be a PDSCH, a physical downlink control channel (physical downlink control channel, PDCCH), or another downlink channel. For another example, the downlink information is information transmitted on a PDSCH, or information transmitted on a PDCCH, or information transmitted on another downlink channel. It should be noted that, that the second frequency domain resource at least partially overlaps the first frequency domain resource may also be understood as that the second frequency domain resource is the same as or partially the same as the first frequency domain resource. The access network device configures the second frequency domain resource for the downlink information of the cell. The second frequency domain resource and the first frequency domain resource separately occupy a part of the available bandwidth of the access network device. In other words, both the second frequency domain resource and the first frequency domain resource are narrowband resources. In addition, the second frequency domain resource is the same as or partially the same as the first frequency domain resource. The same may be understood as using a completely same frequency domain resource (a unit of the frequency domain may be a resource block group or another frequency domain resource unit), and the partially the same may be understood as using a partially same frequency domain resource (a unit of the frequency domain resource may be a resource block group or another frequency domain resource unit). Compared with a bandwidth part (bandwidth part, BWP) solution, in this solution, the access network device configures the cell with the second frequency domain resource for transmitting the downlink information without needing the terminal device to report a capability, to expand an application scope of the access network device, and add a type of the terminal device supported by the access network device. When the downlink information is a reference signal, measurement accuracy based on the reference signal can be effectively improved, and a bit error rate can be reduced. When the downlink information is a reference signal or a PDCCH, energy consumption of the terminal device and the access network device can be further effectively reduced.

With reference to the first aspect, in a possible implementation of the first aspect, the access network device adjusts a bandwidth of the second frequency domain resource based on physical resource block utilization of the cell and/or an amount of downlink data of a terminal device in the cell.

First, the PRB utilization of the cell is described. The PRB utilization of the cell may be a quantity of used physical resource blocks in the cell in a period of time divided by a total quantity of physical resource blocks in the cell. The PRB utilization of the cell may be collected in a unit of seconds, for example, the PRB utilization of the cell is collected every 5 seconds or every 10 seconds. The PRB utilization of the cell may alternatively be collected in a unit of minutes, for example, the PRB utilization of the cell is collected every 5 seconds or every 20 minutes. The PRB utilization of the cell may alternatively be collected in a unit of hours, for example, the PRB utilization of the cell is collected every one hour or every three hours. The PRB utilization of the cell may also be collected at another granularity, for example, the PRB utilization of the cell is collected once every day.

Then, the amount of the downlink data of the terminal device in the cell is described. The amount of the downlink data of the terminal device in the cell may be an amount of downlink data of a specific terminal device in the cell, or may be downlink data volumes of a plurality of terminal devices in the cell. The amount of the downlink data of the terminal device may be an amount of data transmitted by the terminal device in the cell in a past period of time, for example, an amount of downlink data that has been sent by the access network device to the terminal device. Alternatively, the amount of the downlink data of the terminal device may be an amount of downlink data that is to be sent by the access network device to the terminal device (or an amount of to-be-scheduled downlink data of the terminal device in the access network device), for example, an amount of downlink data that is to be sent by the access network device to the terminal device in the cell in a future period of time.

In this embodiment of this application, the access network device may further dynamically adjust the bandwidth of the second frequency domain resource based on an actual service scenario, to improve downlink information transmission quality while reducing energy consumption of the access network device and the terminal device, and further improve communication quality. When the downlink information is a reference signal, matching between a channel measurement result based on the reference signal and an actual service scenario can be effectively improved, to further improve communication quality.

With reference to the first aspect, in a possible implementation of the first aspect, the downlink information includes one or more of the following: a channel state information reference signal CSI-RS, a tracking reference signal TRS, or a physical downlink control channel PDCCH.

With reference to the first aspect, in a possible implementation of the first aspect, the amount of the downlink data of the terminal device includes an amount of downlink data that has been sent by the access network device to the terminal device, and/or an amount of downlink data that is to be sent by the access network device to the terminal device.

In this embodiment of this application, the amount of the downlink data of the terminal device in the cell may be an amount of downlink data of a terminal device in the cell, or may be downlink data volumes of a plurality of terminal devices in the cell. The amount of the downlink data of the terminal device may be an amount of data transmitted by the terminal device in the cell in a past period of time, for example, an amount of downlink data that has been sent by the access network device to the terminal device. Alternatively, the amount of the downlink data of the terminal device may be an amount of downlink data that is to be sent by the access network device to the terminal device (or an amount of to-be-scheduled downlink data of the terminal device in the access network device), for example, an amount of downlink data that is to be sent by the access network device to the terminal device in the cell in a future period of time.

It may be understood that the amount of the downlink data may be represented by using a quantity of physical resource blocks. For example, the amount of downlink data that has been sent by the access network device to the terminal device may be understood as a quantity of physical resource blocks used by the terminal device (or a quantity of physical resource blocks that have been used by the terminal device).

For another example, the amount of the downlink data of the terminal device may be PRB utilization of the terminal device in the first cell in the last 10 minutes. Alternatively, the amount of the downlink data of the terminal device may be an amount of to-be-scheduled downlink data of the terminal device in the first cell in the access network device, for example, an amount of to-be-scheduled downlink data of the terminal device in the first cell in the next 10 minutes in the access network device.

For another example, the amount of the downlink data of the terminal device may be PRB utilization of the terminal device in the first cell in the last five seconds. Alternatively, the amount of the downlink data of the terminal device may be an amount of downlink data that is of the terminal device in the first cell and that is to be sent by the access network device to the terminal device in a future period of time, for example, an amount of downlink data that is of the terminal device in the first cell and that is to be sent by the access network device to the terminal device in the next five seconds.

In other words, the amount of the downlink data of the terminal device is downlink-related data of the terminal device in a current cell, data that has been sent by the access network device, or data that has not been sent by the access network device currently.

With reference to the first aspect, in a possible implementation of the first aspect, that the access network device adjusts a bandwidth of the second frequency domain resource based on physical resource block utilization of the cell and/or an amount of downlink data of a terminal device in the cell includes: If the physical resource block utilization of the cell is less than a first physical resource block utilization threshold, the access network device decreases the bandwidth of the second frequency domain resource.

For example, the second frequency domain resource includes a frequency domain resource slice (1) and a frequency domain resource slice (2) before the bandwidth is adjusted. If the physical resource block utilization of the cell is less than the first physical resource block utilization threshold, the access network device decreases the bandwidth of the second frequency domain resource. The adjusted second frequency domain resource includes the frequency domain resource slice (1) or the adjusted second frequency domain resource includes the frequency domain resource slice (2). The access network device transmits the downlink information by using the adjusted second frequency domain resource (that is, the second frequency domain resource whose bandwidth is decreased).

It may be understood that the access network device may further adjust the bandwidth of the first frequency domain resource, including but not limited to: adjusting the bandwidth of the first frequency domain resource based on the bandwidth of the second frequency domain resource, or separately adjusting the bandwidth of the first frequency domain resource. A specific condition and method for adjusting the bandwidth of the first frequency domain resource are similar to the condition and method for adjusting the bandwidth of the second frequency domain resource. Details are not described herein again.

With reference to the first aspect, in a possible implementation of the first aspect, that the access network device adjusts a bandwidth of the second frequency domain resource based on physical resource block utilization of the cell and/or an amount of downlink data of a terminal device in the cell includes: If the physical resource block utilization of the cell is greater than or equal to a second physical resource block utilization threshold, the access network device increases the bandwidth of the second frequency domain resource.

For example, the second frequency domain resource includes a frequency domain resource slice (1) before bandwidth is adjusted. If the physical resource block utilization of the cell is greater than or equal to the second physical resource block utilization threshold, the access network device increases the bandwidth of the second frequency domain resource. The adjusted second frequency domain resource includes the frequency domain resource slice (1) and the frequency domain resource slice (2). The access network device transmits the downlink information by using the adjusted second frequency domain resource (that is, the second frequency domain resource whose bandwidth is increased). In another example, in addition to the frequency domain resource slice (1), the adjusted second frequency domain resource may further include another frequency domain resource slice. For example, the adjusted second frequency domain resource includes the frequency domain resource slice (1), a frequency domain resource slice (3), and the like.

It may be understood that the access network device may further adjust the bandwidth of the first frequency domain resource, including but not limited to: adjusting the bandwidth of the first frequency domain resource based on the bandwidth of the second frequency domain resource, or separately adjusting the bandwidth of the first frequency domain resource. A condition and method for adjusting the bandwidth of the first frequency domain resource are similar to the condition and method for adjusting the bandwidth of the second frequency domain resource. Details are not described herein again.

With reference to the first aspect, in a possible implementation of the first aspect, the second physical resource block utilization threshold is greater than the first physical resource block utilization threshold.

With reference to the first aspect, in a possible implementation of the first aspect, that the access network device adjusts a bandwidth of the second frequency domain resource based on physical resource block utilization of the cell and/or an amount of downlink data of a terminal device in the cell includes: If the amount of the downlink data of the terminal device in the cell is less than a first data threshold, the access network device decreases the bandwidth of the second frequency domain resource.

For example, the second frequency domain resource includes a frequency domain resource slice (1) and a frequency domain resource slice (2) before the bandwidth is adjusted. If the amount of the downlink data of the terminal device in the cell is less than the first data threshold, the access network device decreases the bandwidth of the second frequency domain resource. The adjusted second frequency domain resource includes the frequency domain resource slice (1) or the adjusted second frequency domain resource includes the frequency domain resource slice (2). The access network device transmits the downlink information by using the adjusted second frequency domain resource (that is, the second frequency domain resource whose bandwidth is decreased). It may be understood that the access network device may further adjust the bandwidth of the first frequency domain resource, including but not limited to: adjusting the bandwidth of the first frequency domain resource based on the bandwidth of the second frequency domain resource, or separately adjusting the bandwidth of the first frequency domain resource. A specific condition and method for adjusting the bandwidth of the first frequency domain resource are similar to the condition and method for adjusting the bandwidth of the second frequency domain resource. Details are not described herein again.

With reference to the first aspect, in a possible implementation of the first aspect, that the access network device adjusts a bandwidth of the second frequency domain resource based on physical resource block utilization of the cell and/or an amount of downlink data of a terminal device in the cell includes: If the amount of the downlink data of the terminal device in the cell is greater than or equal to a second data threshold, the access network device increases the bandwidth of the second frequency domain resource.

For example, the second frequency domain resource includes a frequency domain resource slice (1) before the bandwidth is adjusted. If the amount of the downlink data of the terminal device is greater than or equal to the second data threshold, the access network device increases the bandwidth of the second frequency domain resource. The adjusted second frequency domain resource includes the frequency domain resource slice (1) and a frequency domain resource slice (2). The access network device transmits the downlink information by using the adjusted second frequency domain resource (that is, the second frequency domain resource whose bandwidth is increased). In another example, in addition to the frequency domain resource slice (1), the adjusted second frequency domain resource may further include another frequency domain resource slice. For example, the adjusted second frequency domain resource includes the frequency domain resource slice (1), a frequency domain resource slice (3), and the like.

It may be understood that the access network device may further adjust the bandwidth of the first frequency domain resource, including but not limited to: adjusting the bandwidth of the first frequency domain resource based on the bandwidth of the second frequency domain resource, or separately adjusting the bandwidth of the first frequency domain resource. A condition and method for adjusting the bandwidth of the first frequency domain resource are similar to the condition and method for adjusting the bandwidth of the second frequency domain resource. Details are not described herein again.

With reference to the first aspect, in a possible implementation of the first aspect, the second data threshold is greater than the first data threshold.

With reference to the first aspect, in a possible implementation of the first aspect, the first frequency domain resource is a frequency domain resource determined by the access network device based on a physical cell identifier PCI corresponding to the cell.

Specifically, the access network device initializes and allocates frequency domain resources to each cell, and performs allocation based on a physical cell identifier (physical cell id, PCI) of each cell. Specifically, a PCI mod N (mod N) manner is used for allocation, that is, frequency domain resources are allocated based on PCIs of different cells. When PCI mod results are different, start positions of frequency domain resources allocated to the cells are different, where N is a positive integer. A corresponding frequency domain resource in the first frequency domain resource is allocated in a PCI mod N manner.

With reference to the first aspect, in a possible implementation of the first aspect, the cell is a first cell, and the method further includes: The access network device configures a second frequency domain resource for a second cell, where the second frequency domain resource of the second cell is a frequency domain resource available to the second cell for transmitting the downlink information, and occupies a part of the available bandwidth of the access network device, and the second frequency domain resource of the second cell does not overlap the second frequency domain resource of the first cell.

For example, the access network device manages the first cell, the second cell, and a third cell. The access network device separately configures a second frequency domain resource for the first cell, the second cell, and the third cell. The second frequency domain resource of the first cell is a frequency domain resource available to the first cell for transmitting the downlink information, and occupies a part of the available bandwidth of the access network device. The second frequency domain resource of the second cell is a frequency domain resource available to the second cell for transmitting the downlink information, and occupies a part of the available bandwidth of the access network device. The second frequency domain resource of the third cell is a frequency domain resource available to the third cell for transmitting the downlink information, and occupies a part of the available bandwidth of the access network device. The second frequency domain resources of different cells do not overlap. To be specific, the second frequency domain resource of the first cell does not overlap the second frequency domain resource of the second cell, the second frequency domain resource of the second cell does not overlap the second frequency domain resource of the third cell, and the second frequency domain resource of the first cell does not overlap the second frequency domain resource of the third cell. That the second frequency domain resources of different cells do not overlap may also be understood as that the second frequency domain resources of different cells are different.

With reference to the first aspect, in a possible implementation of the first aspect, the first frequency domain resource is inconsecutive, and/or the second frequency domain resource is inconsecutive. An example in which the frequency domain resource slice used by the first frequency domain resource is a frequency domain resource slice (1) is used for description. For example, the frequency domain resource slice (1) includes a resource block group 1, a resource block group 3, a resource block group 5, a resource block group 7, and a resource block group 9. The resource block group 1, the resource block group 3, the resource block group 5, the resource block group 7, and the resource block group 9 are five inconsecutive resource block groups. With reference to the first aspect, in a possible implementation of the first aspect, the first frequency domain resource is consecutive, and/or the second frequency domain resource is consecutive. An example in which the frequency domain resource slice used by the first frequency domain resource is a frequency domain resource slice (1) is used for description. For example, the frequency domain resource slice (1) includes a resource block group 1, a resource block group 2, a resource block group 3, a resource block group 4, and a resource block group 5. The resource block group 1, the resource block group 2, the resource block group 3, the resource block group 4, and the resource block group 5 are five consecutive resource block groups.

According to a second aspect, an embodiment of this application provides a frequency domain resource configuration method, including:
an access network device configures a first frequency domain resource for a physical downlink shared channel PDSCH of a cell, where the first frequency domain resource occupies a part of an available bandwidth of the access network device;
the access network device configures a second frequency domain resource for the cell, where the second frequency domain resource is a frequency domain resource available to the cell for transmitting downlink information, and occupies a part of the available bandwidth of the access network device, and the second frequency domain resource at least partially overlaps the first frequency domain resource; and
the access network device adjusts a bandwidth of the second frequency domain resource based on physical resource block utilization of the cell and/or an amount of downlink data of a terminal device in the cell.

In this embodiment of this application, the access network device configures the first frequency domain resource for the PDSCH, and the first frequency domain resource occupies a part of the available bandwidth of the access network device. The access network device configures the second frequency domain resource for the cell. The second frequency domain resource is a frequency domain resource available to the cell for transmitting the downlink information, and occupies a part of the available bandwidth of the access network device. The second frequency domain resource is the same as or partially the same as the first frequency domain resource. The access network device configures the second frequency domain resource for the downlink information of the cell. The second frequency domain resource and the first frequency domain resource separately occupy a part of the available bandwidth of the access network device. In other words, both the second frequency domain resource and the first frequency domain resource are narrowband resources. In addition, the second frequency domain resource is the same as or partially the same as the first frequency domain resource. The same may be understood as using a same frequency domain resource, and the partially the same may be understood as using a partially same frequency domain resource. Compared with a bandwidth part (bandwidth part, BWP) solution, in this solution, the access network device configures the cell with the second frequency domain resource for transmitting the downlink information without needing the terminal device to report a capability, to expand an application scope of the access network device, and add a type of the terminal device supported by the access network device. When the downlink information is a reference signal, measurement accuracy based on the reference signal can be effectively improved, and a bit error rate can be reduced. When the downlink information is a reference signal or a PDCCH, energy consumption of the terminal device and the access network device can be further effectively reduced. In addition, the access network device may further dynamically adjust the bandwidth of the second frequency domain resource based on an actual service scenario, to improve downlink information transmission quality while reducing energy consumption of the access network device and the terminal device, and further improve communication quality. When the downlink information is a reference signal, matching between a channel measurement result based on the reference signal and an actual service scenario can be effectively improved, to further improve communication quality.

With reference to the second aspect, in a possible implementation of the second aspect, the downlink information includes one or more of the following: a channel state information reference signal CSI-RS, a tracking reference signal TRS, or a physical downlink control channel PDCCH. With reference to the second aspect, in a possible implementation of the second aspect, the amount of the downlink data of the terminal device includes an amount of downlink data that has been sent by the access network device to the terminal device, and/or an amount of downlink data that is to be sent by the access network device to the terminal device.

In this embodiment of this application, the amount of the downlink data of the terminal device in the cell may be an amount of downlink data of a terminal device in the cell, or may be downlink data volumes of a plurality of terminal devices in the cell. The amount of the downlink data of the terminal device may be an amount of data transmitted by the terminal device in the cell in a past period of time, for example, an amount of downlink data that has been sent by the access network device to the terminal device. Alternatively, the amount of the downlink data of the terminal device may be an amount of downlink data that is to be sent by the access network device to the terminal device (or an amount of to-be-scheduled downlink data of the terminal device in the access network device), for example, an amount of downlink data that is to be sent by the access network device to the terminal device in the cell in a future period of time.

It may be understood that the amount of the downlink data may be represented by using a quantity of physical resource blocks. For example, the amount of downlink data that has been sent by the access network device to the terminal device may be understood as a quantity of physical resource blocks used by the terminal device (or a quantity of physical resource blocks that have been used by the terminal device).

For another example, the amount of the downlink data of the terminal device may be PRB utilization of the terminal device in the first cell in the last 10 minutes. Alternatively, the amount of the downlink data of the terminal device may be an amount of to-be-scheduled downlink data of the terminal device in the first cell in the access network device, for example, an amount of to-be-scheduled downlink data of the terminal device in the first cell in the next 10 minutes in the access network device.

For another example, the amount of the downlink data of the terminal device may be PRB utilization of the terminal device in the first cell in the last five seconds. Alternatively, the amount of the downlink data of the terminal device may be an amount of downlink data that is of the terminal device in the first cell and that is to be sent by the access network device to the terminal device in a future period of time, for example, an amount of downlink data that is of the terminal device in the first cell and that is to be sent by the access network device to the terminal device in the next five seconds.

In other words, the amount of the downlink data of the terminal device is downlink-related data of the terminal device in a current cell, data that has been sent by the access network device, or data that has not been sent by the access network device currently.

With reference to the second aspect, in a possible implementation of the second aspect, that the access network device adjusts a bandwidth of the second frequency domain resource based on physical resource block utilization of the cell and/or an amount of downlink data of a terminal device in the cell includes: If the physical resource block utilization of the cell is less than a first physical resource block utilization threshold, the access network device decreases the bandwidth of the second frequency domain resource.

For example, the second frequency domain resource includes a frequency domain resource slice (1) and a frequency domain resource slice (2) before the bandwidth is adjusted. If the physical resource block utilization of the cell is less than the first physical resource block utilization threshold, the access network device decreases the bandwidth of the second frequency domain resource. The adjusted second frequency domain resource includes the frequency domain resource slice (1) or the adjusted second frequency domain resource includes the frequency domain resource slice (2). The access network device transmits the downlink information by using the adjusted second frequency domain resource (that is, the second frequency domain resource whose bandwidth is decreased).

It may be understood that the access network device may further adjust the bandwidth of the first frequency domain resource, including but not limited to: adjusting the bandwidth of the first frequency domain resource based on the bandwidth of the second frequency domain resource, or separately adjusting the bandwidth of the first frequency domain resource. A specific condition and method for adjusting the bandwidth of the first frequency domain resource are similar to the condition and method for adjusting the bandwidth of the second frequency domain resource. Details are not described herein again.

With reference to the second aspect, in a possible implementation of the second aspect, that the access network device adjusts a bandwidth of the second frequency domain resource based on physical resource block utilization of the cell and/or an amount of downlink data of a terminal device in the cell includes: If the physical resource block utilization of the cell is greater than or equal to a second physical resource block utilization threshold, the access network device increases the bandwidth of the second frequency domain resource.

For example, the second frequency domain resource includes a frequency domain resource slice (1) before bandwidth is adjusted. If the physical resource block utilization of the cell is greater than or equal to the second physical resource block utilization threshold, the access network device increases the bandwidth of the second frequency domain resource. The adjusted second frequency domain resource includes the frequency domain resource slice (1) and a frequency domain resource slice (2). The access network device transmits the downlink information by using the adjusted second frequency domain resource (that is, the second frequency domain resource whose bandwidth is increased). In another example, in addition to the frequency domain resource slice (1), the adjusted second frequency domain resource may further include another frequency domain resource slice. For example, the adjusted second frequency domain resource includes the frequency domain resource slice (1), a frequency domain resource slice (3), and the like.

It may be understood that the access network device may further adjust the bandwidth of the first frequency domain resource, including but not limited to: adjusting the bandwidth of the first frequency domain resource based on the bandwidth of the second frequency domain resource, or separately adjusting the bandwidth of the first frequency domain resource. A condition and method for adjusting the bandwidth of the first frequency domain resource are similar to the condition and method for adjusting the bandwidth of the second frequency domain resource. Details are not described herein again.

With reference to the second aspect, in a possible implementation of the second aspect, the second physical resource block utilization threshold is greater than the first physical resource block utilization threshold.

With reference to the second aspect, in a possible implementation of the second aspect, that the access network device adjusts a bandwidth of the second frequency domain resource based on physical resource block utilization of the cell and/or an amount of downlink data of a terminal device in the cell includes: If the amount of the downlink data of the terminal device in the cell is less than a first data threshold, the access network device decreases the bandwidth of the second frequency domain resource.

For example, the second frequency domain resource includes a frequency domain resource slice (1) and a frequency domain resource slice (2) before the bandwidth is adjusted. If the amount of the downlink data of the terminal device in the cell is less than the first data threshold, the access network device decreases the bandwidth of the second frequency domain resource. The adjusted second frequency domain resource includes the frequency domain resource slice (1) or the adjusted second frequency domain resource includes the frequency domain resource slice (2). The access network device transmits the downlink information by using the adjusted second frequency domain resource (that is, the second frequency domain resource whose bandwidth is decreased). It may be understood that the access network device may further adjust the bandwidth of the first frequency domain resource, including but not limited to: adjusting the bandwidth of the first frequency domain resource based on the bandwidth of the second frequency domain resource, or separately adjusting the bandwidth of the first frequency domain resource. A specific condition and method for adjusting the bandwidth of the first frequency domain resource are similar to the condition and method for adjusting the bandwidth of the second frequency domain resource. Details are not described herein again.

With reference to the second aspect, in a possible implementation of the second aspect, that the access network device adjusts a bandwidth of the second frequency domain resource based on physical resource block utilization of the cell and/or an amount of downlink data of a terminal device in the cell includes: If the amount of the downlink data of the terminal device in the cell is greater than or equal to a second data threshold, the access network device increases the bandwidth of the second frequency domain resource.

For example, the second frequency domain resource includes a frequency domain resource slice (1) before the bandwidth is adjusted. If the amount of the downlink data of the terminal device is greater than or equal to the second data threshold, the access network device increases the bandwidth of the second frequency domain resource. The adjusted second frequency domain resource includes the frequency domain resource slice (1) and a frequency domain resource slice (2). The access network device transmits the downlink information by using the adjusted second frequency domain resource (that is, the second frequency domain resource whose bandwidth is increased). In another example, in addition to the frequency domain resource slice (1), the adjusted second frequency domain resource may further include another frequency domain resource slice. For example, the adjusted second frequency domain resource includes the frequency domain resource slice (1), a frequency domain resource slice (3), and the like.

It may be understood that the access network device may further adjust the bandwidth of the first frequency domain resource, including but not limited to: adjusting the bandwidth of the first frequency domain resource based on the bandwidth of the second frequency domain resource, or separately adjusting the bandwidth of the first frequency domain resource. A condition and method for adjusting the bandwidth of the first frequency domain resource are similar to the condition and method for adjusting the bandwidth of the second frequency domain resource. Details are not described herein again.

With reference to the second aspect, in a possible implementation of the second aspect, the second data threshold is greater than the first data threshold.

With reference to the second aspect, in a possible implementation of the second aspect, the first frequency domain resource is a frequency domain resource determined by the access network device based on a physical cell identifier PCI corresponding to the cell.

Specifically, the access network device initializes and allocates frequency domain resources to each cell, and performs allocation based on a physical cell identifier (physical cell id, PCI) of each cell. Specifically, a PCI mod N (mod N) manner is used for allocation, that is, frequency domain resources are allocated based on PCIs of different cells. When PCI mod results are different, start positions of frequency domain resources allocated to the cells are different, where N is a positive integer. A corresponding frequency domain resource in the first frequency domain resource is allocated in a PCI mod N manner.

With reference to the second aspect, in a possible implementation of the second aspect, the cell is a first cell, and the method further includes: The access network device configures a second frequency domain resource for a second cell, where the second frequency domain resource of the second cell is a frequency domain resource available to the second cell for transmitting the downlink information, and occupies a part of the available bandwidth of the access network device, and the second frequency domain resource of the second cell does not overlap the second frequency domain resource of the first cell.

For example, the access network device manages the first cell, the second cell, and a third cell. The access network device separately configures a second frequency domain resource for the first cell, the second cell, and the third cell. The second frequency domain resource of the first cell is a frequency domain resource available to the first cell for transmitting the downlink information, and occupies a part of the available bandwidth of the access network device. The second frequency domain resource of the second cell is a frequency domain resource available to the second cell for transmitting the downlink information, and occupies a part of the available bandwidth of the access network device. The second frequency domain resource of the third cell is a frequency domain resource available to the third cell for transmitting the downlink information, and occupies a part of the available bandwidth of the access network device. The second frequency domain resources of different cells do not overlap. To be specific, the second frequency domain resource of the first cell does not overlap the second frequency domain resource of the second cell, the second frequency domain resource of the second cell does not overlap the second frequency domain resource of the third cell, and the second frequency domain resource of the first cell does not overlap the second frequency domain resource of the third cell. That the second frequency domain resources of different cells do not overlap may also be understood as that the second frequency domain resources of different cells are different.

With reference to the second aspect, in a possible implementation of the second aspect, the first frequency domain resource is inconsecutive, and/or the second frequency domain resource is inconsecutive. An example in which the frequency domain resource slice used by the first frequency domain resource is a frequency domain resource slice (1) is used for description. For example, the frequency domain resource slice (1) includes a resource block group 1, a resource block group 3, a resource block group 5, a resource block group 7, and a resource block group 9. The resource block group 1, the resource block group 3, the resource block group 5, the resource block group 7, and the resource block group 9 are five inconsecutive resource block groups.

With reference to the second aspect, in a possible implementation of the second aspect, the first frequency domain resource is consecutive, and/or the second frequency domain resource is consecutive. An example in which the frequency domain resource slice used by the first frequency domain resource is a frequency domain resource slice (1) is used for description. For example, the frequency domain resource slice (1) includes a resource block group 1, a resource block group 2, a resource block group 3, a resource block group 4, and a resource block group 5. The resource block group 1, the resource block group 2, the resource block group 3, the resource block group 4, and the resource block group 5 are five consecutive resource block groups.

According to a third aspect, an embodiment of this application provides a communication apparatus, including:
a processing module, configured to configure a first frequency domain resource for a physical downlink shared channel PDSCH of a cell, where the first frequency domain resource occupies a part of an available bandwidth of an access network device.

The processing module is further configured to configure a second frequency domain resource for the cell, where the second frequency domain resource is a frequency domain resource available to the cell for transmitting downlink information, and occupies a part of the available bandwidth of the access network device, and the second frequency domain resource at least partially overlaps the first frequency domain resource.

In a possible implementation, the processing module is further configured to adjust a bandwidth of the second frequency domain resource based on physical resource block utilization of the cell and/or an amount of downlink data of a terminal device in the cell.

In a possible implementation, the downlink information includes one or more of the following: a channel state information reference signal CSI-RS, a tracking reference signal TRS, or a physical downlink control channel PDCCH.

In a possible implementation, the amount of the downlink data of the terminal device includes:
an amount of downlink data that has been sent by the access network device to the terminal device, and/or an amount of downlink data that is to be sent by the access network device to the terminal device.

In a possible implementation, the processing module is further configured to: if the physical resource block utilization of the cell is less than a first physical resource block utilization threshold, decrease the bandwidth of the second frequency domain resource.

In a possible implementation, the processing module is further configured to: if the physical resource block utilization of the cell is greater than or equal to a second physical resource block utilization threshold, increase the bandwidth of the second frequency domain resource.

In a possible implementation, the processing module is further configured to: if the amount of the downlink data of the terminal device in the cell is less than a first data threshold, decrease the bandwidth of the second frequency domain resource.

In a possible implementation, the processing module is further configured to: if the amount of the downlink data of the terminal device in the cell is greater than or equal to a second data threshold, increase the bandwidth of the second frequency domain resource.

In a possible implementation, the first frequency domain resource is a frequency domain resource determined by the access network device based on a physical cell identifier PCI corresponding to the cell.

In a possible implementation, the cell is a first cell, and the processing module is further configured to configure a second frequency domain resource for a second cell, where the second frequency domain resource of the second cell is a frequency domain resource available to the second cell for transmitting the downlink information, and occupies a part of the available bandwidth of the access network device, and the second frequency domain resource of the second cell does not overlap the second frequency domain resource of the first cell.

In a possible implementation, the first frequency domain resource is inconsecutive, and/or the second frequency domain resource is inconsecutive.

In a possible implementation, the first frequency domain resource is consecutive, and/or the second frequency domain resource is consecutive.

According to a fourth aspect, an embodiment of this application provides a communication apparatus, including:
a processing module, configured to configure a first frequency domain resource for a physical downlink shared channel PDSCH of a cell, where the first frequency domain resource occupies a part of an available bandwidth of an access network device.

The processing module is further configured to configure a second frequency domain resource for the cell, where the second frequency domain resource is a frequency domain resource available to the cell for transmitting downlink information, and occupies a part of the available bandwidth of the access network device, and the second frequency domain resource at least partially overlaps the first frequency domain resource.

The processing module is further configured to adjust a bandwidth of the second frequency domain resource based on physical resource block utilization of the cell and/or an amount of downlink data of a terminal device in the cell.

In a possible implementation, the downlink information includes one or more of the following: a channel state information reference signal CSI-RS, a tracking reference signal TRS, or a physical downlink control channel PDCCH.

In a possible implementation, the amount of the downlink data of the terminal device includes:
an amount of downlink data that has been sent by the access network device to the terminal device, and/or an amount of downlink data that is to be sent by the access network device to the terminal device.

In a possible implementation, the processing module is further configured to: if the physical resource block utilization of the cell is less than a first physical resource block utilization threshold, decrease the bandwidth of the second frequency domain resource.

In a possible implementation, the processing module is further configured to: if the physical resource block utilization of the cell is greater than or equal to a second physical resource block utilization threshold, increase the bandwidth of the second frequency domain resource.

In a possible implementation, the processing module is further configured to: if the amount of the downlink data of the terminal device in the cell is less than a first data threshold, decrease the bandwidth of the second frequency domain resource.

In a possible implementation, the processing module is further configured to: if the amount of the downlink data of the terminal device in the cell is greater than or equal to a second data threshold, increase the bandwidth of the second frequency domain resource.

In a possible implementation, the first frequency domain resource is a frequency domain resource determined by the access network device based on a physical cell identifier PCI corresponding to the cell.

In a possible implementation, the cell is a first cell, and the processing module is further configured to configure a second frequency domain resource for a second cell, where the second frequency domain resource of the second cell is a frequency domain resource available to the second cell for transmitting the downlink information, and occupies a part of the available bandwidth of the access network device, and the second frequency domain resource of the second cell does not overlap the second frequency domain resource of the first cell.

In a possible implementation, the first frequency domain resource is inconsecutive, and/or the second frequency domain resource is inconsecutive.

In a possible implementation, the first frequency domain resource is consecutive, and/or the second frequency domain resource is consecutive.

According to a fifth aspect, an embodiment of this application provides a communication apparatus, including:
a processor, configured to configure a first frequency domain resource for a physical downlink shared channel PDSCH of a cell, where the first frequency domain resource occupies a part of an available bandwidth of an access network device.

The processor is further configured to configure a second frequency domain resource for the cell, where the second frequency domain resource is a frequency domain resource available to the cell for transmitting downlink information, and occupies a part of the available bandwidth of the access network device, and the second frequency domain resource at least partially overlaps the first frequency domain resource.

In a possible implementation, the processor is further configured to adjust a bandwidth of the second frequency domain resource based on physical resource block utilization of the cell and/or an amount of downlink data of a terminal device in the cell.

In a possible implementation, the downlink information includes one or more of the following: a channel state information reference signal CSI-RS, a tracking reference signal TRS, or a physical downlink control channel PDCCH.

In a possible implementation, the amount of the downlink data of the terminal device includes:
an amount of downlink data that has been sent by the access network device to the terminal device, and/or an amount of downlink data that is to be sent by the access network device to the terminal device.

In a possible implementation, the processor is further configured to: if the physical resource block utilization of the cell is less than a first physical resource block utilization threshold, decrease the bandwidth of the second frequency domain resource.

In a possible implementation, the processor is further configured to: if the physical resource block utilization of the cell is greater than or equal to a second physical resource block utilization threshold, increase the bandwidth of the second frequency domain resource.

In a possible implementation, the processor is further configured to: if the amount of the downlink data of the terminal device in the cell is less than a first data threshold, decrease the bandwidth of the second frequency domain resource.

In a possible implementation, the processor is further configured to: if the amount of the downlink data of the terminal device in the cell is greater than or equal to a second data threshold, increase the bandwidth of the second frequency domain resource.

In a possible implementation, the first frequency domain resource is a frequency domain resource determined by the access network device based on a physical cell identifier PCI corresponding to the cell.

In a possible implementation, the cell is a first cell, and the processor is further configured to configure a second frequency domain resource for a second cell, where the second frequency domain resource of the second cell is a frequency domain resource available to the second cell for transmitting the downlink information, and occupies a part of the available bandwidth of the access network device, and the second frequency domain resource of the second cell does not overlap the second frequency domain resource of the first cell.

In a possible implementation, the first frequency domain resource is inconsecutive, and/or the second frequency domain resource is inconsecutive.

In a possible implementation, the first frequency domain resource is consecutive, and/or the second frequency domain resource is consecutive.

According to a sixth aspect, an embodiment of this application provides a communication apparatus, including:
a processor, configured to configure a first frequency domain resource for a physical downlink shared channel PDSCH of a cell, where the first frequency domain resource occupies a part of an available bandwidth of an access network device.

The processor is further configured to configure a second frequency domain resource for the cell, where the second frequency domain resource is a frequency domain resource available to the cell for transmitting downlink information, and occupies a part of the available bandwidth of the access network device, and the second frequency domain resource at least partially overlaps the first frequency domain resource.

The processor is further configured to adjust a bandwidth of the second frequency domain resource based on physical resource block utilization of the cell and/or an amount of downlink data of a terminal device in the cell.

In a possible implementation, the downlink information includes one or more of the following: a channel state information reference signal CSI-RS, a tracking reference signal TRS, or a physical downlink control channel PDCCH.

In a possible implementation, the amount of the downlink data of the terminal device includes:
an amount of downlink data that has been sent by the access network device to the terminal device, and/or an amount of downlink data that is to be sent by the access network device to the terminal device.

In a possible implementation, the processor is further configured to: if the physical resource block utilization of the cell is less than a first physical resource block utilization threshold, decrease the bandwidth of the second frequency domain resource.

In a possible implementation, the processor is further configured to: if the physical resource block utilization of the cell is greater than or equal to a second physical resource block utilization threshold, increase the bandwidth of the second frequency domain resource.

In a possible implementation, the processor is further configured to: if the amount of the downlink data of the terminal device in the cell is less than a first data threshold, decrease the bandwidth of the second frequency domain resource.

In a possible implementation, the processor is further configured to: if the amount of the downlink data of the terminal device in the cell is greater than or equal to a second data threshold, increase the bandwidth of the second frequency domain resource.

In a possible implementation, the first frequency domain resource is a frequency domain resource determined by the access network device based on a physical cell identifier PCI corresponding to the cell.

In a possible implementation, the cell is a first cell, and the processor is further configured to configure a second frequency domain resource for a second cell, where the second frequency domain resource of the second cell is a frequency domain resource available to the second cell for transmitting the downlink information, and occupies a part of the available bandwidth of the access network device, and the second frequency domain resource of the second cell does not overlap the second frequency domain resource of the first cell.

In a possible implementation, the first frequency domain resource is inconsecutive, and/or the second frequency domain resource is inconsecutive.

In a possible implementation, the first frequency domain resource is consecutive, and/or the second frequency domain resource is consecutive.

According to a seventh aspect, an embodiment of this application provides a communication apparatus. The communication apparatus may implement functions performed by the access network device in the method according to the first aspect or the second aspect. The communication apparatus includes a processor, a memory, a receiver connected to the processor, and a transmitter connected to the processor. The memory is configured to store program code, and transmit the program code to the processor. The processor is configured to drive, based on instructions in the program code, the receiver and the transmitter to perform the method according to the first aspect and the second aspect. The receiver and the transmitter are separately connected to the processor, to perform operations of the access network device in the methods according to the foregoing aspects. Specifically, the transmitter may perform a sending operation, and the receiver may perform a receiving operation. Optionally, the receiver and the transmitter may be a radio frequency circuit, and the radio frequency circuit receives and sends a message by using an antenna. Alternatively, the receiver and the transmitter may be a communication interface, the processor is connected to the communication interface through a bus, and the processor receives or sends a message through the communication interface.

According to an eighth aspect, an embodiment of this application provides a communication apparatus. The communication apparatus may include an entity such as an access network device or a chip. The communication apparatus includes a processor and a memory. The memory is configured to store instructions. The processor is configured to execute the instructions in the memory, so that the communication apparatus performs the method according to the first aspect or the second aspect.

According to a ninth aspect, an embodiment of this application provides a computer-readable storage medium storing one or more computer executable instructions. When the computer executable instructions are executed by a processor, the processor performs any one of the possible implementations of the first aspect or the second aspect.

According to a tenth aspect, an embodiment of this application provides a computer program product (or referred to as a computer program) that stores one or more computer executable instructions. When the computer executable instructions are executed by a processor, the processor performs any one of the possible implementations of the first aspect or the second aspect.

According to an eleventh aspect, this application provides a chip system. The chip system includes a processor, configured to support a computer device in implementing functions in the foregoing aspects. In a possible design, the chip system further includes a memory. The memory is configured to store program instructions and data that are necessary for the computer device. The chip system may include a chip, or may include a chip and another discrete component.

According to a twelfth aspect, this application provides a communication system. The communication system includes the communication apparatus according to the third aspect or the fourth aspect.

According to a thirteenth aspect, this application provides a communication system. The communication system includes the communication apparatus according to the fifth aspect or the sixth aspect.

### BRIEF DESCRIPTION OF DRAWINGS

FIG. 1 is a schematic diagram of a network architecture of a communication system;
FIG. 2 is a schematic diagram of a hardware structure of a communication apparatus according to an embodiment of this application;
FIG. 3 is a schematic diagram of a communication scenario;
FIG. 4 is a schematic diagram of another communication scenario;
FIG. 5 is a schematic diagram of an embodiment of a frequency domain resource configuration method according to an embodiment of this application;
FIG. 6 is a schematic diagram of another embodiment of a frequency domain resource configuration method according to an embodiment of this application;
FIG. 7 is a schematic diagram of another embodiment of a frequency domain resource configuration method according to an embodiment of this application;
FIG. 8 is a schematic flowchart of a frequency domain resource configuration method according to an embodiment of this application;
FIG. 9 is a schematic diagram of a frequency domain resource slice according to an embodiment of this application;
FIG. 10 is a schematic diagram of a frequency domain resource slice according to an embodiment of this application;
FIG. 11 is a schematic diagram of a frequency domain resource slice according to an embodiment of this application;
FIG. 12 is a schematic diagram of a frequency domain resource slice according to an embodiment of this application;
FIG. 13 is a schematic diagram of a first frequency domain resource; and
FIG. 14 is a schematic diagram of an embodiment of a communication apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. In the specification, claims, and accompanying drawings of this application, the terms "first", "second", corresponding term numbers, and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one of a, b, or c may represent: a, b, c, a and b, a and c, b and c, or a, b and c, where a, b, and c may be single or may be plural.

The technical solutions in embodiments of this application may be used in various communication systems, for example, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a fifth generation (5th generation, 5G) system (namely, an NR system), and a future 6th generation communication system.

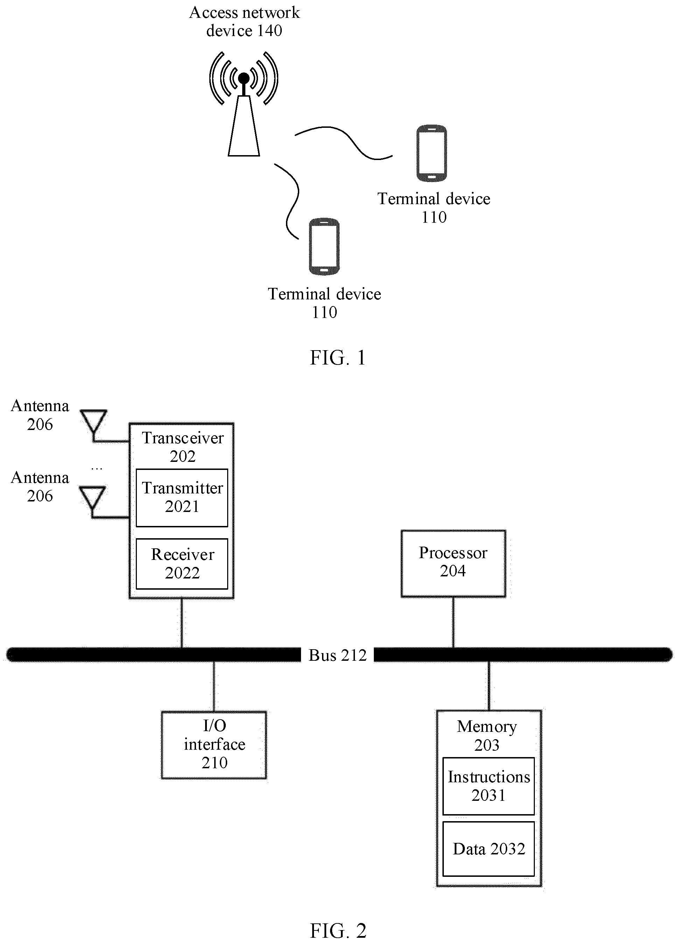

To facilitate understanding of embodiments of this application, a 5G network architecture shown in FIG. 1 is used as an example to describe an application scenario used in this application. It may be understood that an architecture of another communication network is similar to that of the 5G network, and therefore details are not described. FIG. 1 is a schematic diagram of a network architecture of a communication system. The network architecture may include a terminal device and an access network device.

The terminal device includes a terminal device 110, and the terminal device 110 may also be referred to as user equipment (user equipment, UE). The terminal device 110 in embodiments of this application is a device having a wireless transceiver function, and may communicate with one or more core networks (core networks, CNs) by using an access network device that is in a (radio) access network ((radio) access network, (R)AN) 140. The terminal device 110 may also be referred to as an access terminal, a terminal, a subscriber unit, a subscriber station, a mobile station, a mobile console, a remote station, a remote terminal, a mobile device, a user terminal, a wireless network device, a user agent, a user apparatus, or the like. The terminal device 110 may be deployed on land, including indoor, outdoor, handheld, or in-vehicle. Alternatively, the access network device is deployed on a water surface (for example, a ship) or may be deployed in the air (for example, an airplane, a balloon, or a satellite). The terminal device 110 may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, or a personal digital assistant (personal digital assistant, PDA), or may be a handheld device with a wireless communication function, a computing device or another device connected to a wireless modem, an in-vehicle device, a wearable device, a drone device or a terminal in the Internet of Things or in the Internet of Vehicles, or any terminal in a fifth generation (fifth generation, 5G) mobile communication network and a future network, relay user equipment, a terminal in a future evolved public land mobile network (public land mobile network, PLMN), or the like, where the relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation security (transportation safety), a wireless terminal in a smart city (smart city), a wireless terminal in a smart home (smart home), or the like.

The access network device 140 may provide a subnet of an operator network, for example, provide an implementation system between a service node and the terminal device 110 in the operator network. To access the operator network, the terminal device 110 first passes through the (R)AN 140, and then may be connected to the service node in the operator network by using the (R)AN 140. The access network device (RAN device) in embodiments of this application is a device that provides a wireless communication function for the terminal device 110, or the access network device may be referred to as a network device. The RAN device includes but is not limited to a next generation base station (next generation base station, gNB) node in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmitting and receiving point, TRP), a transmission point (transmitting point, TP), a small cell base station (pico), a mobile switching center, or a network device in a future network. In systems using different radio access technologies, devices with functions of the access network device may have different names. For ease of description, in all embodiments of this application, the foregoing apparatuses that provide a wireless communication function for the terminal device 110 are collectively referred to as an access network device, or referred to as a RAN or an AN for short. It should be understood that a specific type of the access network device is not limited in this specification.

In addition, embodiments of this application are also applicable to another future-oriented communication technology, for example, 6G. The network architecture and the service scenario described in this application are intended to describe the technical solutions of this application more clearly, and do not constitute a limitation on the technical solutions provided in this application. A person of ordinary skill in the art may learn that, with evolution of the network architecture and emergence of a new service scenario, network functions in this application may change, and the technical solutions provided in this application are also applicable to similar technical problems.

FIG. 2 is a schematic diagram of a hardware structure of a communication apparatus according to an embodiment of this application. The communication apparatus may be a possible implementation of the access network device or the terminal device in this embodiment of this application. As shown in FIG. 2, the communication apparatus includes at least a processor 204, a memory 203, and a transceiver 202. The memory 203 is further configured to store instructions 2031 and data 2032. Optionally, the communication apparatus may further include antennas 206, an I/O (input/output, Input/Output) interface 210, and a bus 212. The transceiver 202 further includes a transmitter 2021 and a receiver 2022. In addition, the processor 204, the transceiver 202, the memory 203, and the I/O interface 210 are communicatively connected to each other through the bus 212, and the antennas 206 are connected to the transceiver 202.

The processor 204 may be a general-purpose processor, for example, but not limited to a central processing unit (central processing unit, CPU), or the CPU may be a dedicated processor, for example, but not limited to a digital signal processor (digital signal processor, DSP), an application-specific integrated circuit (application-specific integrated circuit, ASIC), and a field programmable gate array (field programmable gate array, FPGA). Alternatively, the processor 204 may be a neural processing unit (neural processing unit, NPU). In addition, the processor 204 may alternatively be a combination of a plurality of processors. Particularly, in the technical solution provided in this embodiment of this application, the processor 204 may be configured to perform related steps of the frequency domain resource configuration method in a subsequent method embodiment. The processor 204 may be a processor that is specially designed to perform the foregoing steps and/or operations, or may be a processor that performs the foregoing steps and/or operations by reading and executing the instructions 2031 stored in the memory 203. The processor 204 may need to use the data 2032 in a process of performing the foregoing steps and/or operations. The transceiver 202 includes the transmitter 2021 and the receiver 2022. In an optional implementation, the transmitter 2021 is configured to send a signal through the antennas 206. The receiver 2022 is configured to receive a signal by using at least one of the antennas 206. Particularly, in the technical solution provided in this embodiment of this application, the transmitter 2021 may be specifically configured to perform an operation by using at least one of the antennas 206, for example, an operation performed by a receiving module or a sending module in the access network device or the terminal device when a frequency domain resource configuration method in a subsequent method embodiment is applied to the access network device or the terminal device. In this embodiment of this application, the transceiver 202 is configured to support the communication apparatus in performing the foregoing receiving function and sending function. A processor having a processing function is considered as the processor 204. The receiver 2022 may also be referred to as an input interface, a receiver circuit, or the like. The transmitter 2021 may be referred to as a transmitter, a transmitter circuit, or the like.

The processor 204 may be configured to execute the instructions stored in the memory 203, to control the transceiver 202 to receive a message and/or send a message, to complete functions of the communication apparatus in the method embodiments of this application. In an implementation, it may be considered that a function of the transceiver 202 is implemented by using a transceiver circuit or a dedicated transceiver chip. In this embodiment of this application, that the transceiver 202 receives a message may be understood as that the transceiver 202 inputs a message, and that the transceiver 202 sends a message may be understood as that the transceiver 202 outputs a message.

The memory 203 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable prom, EPROM), an electrically erasable PROM (electrically erasable prom, EEPROM), a flash memory, an optical memory, and a register. The memory 203 is specifically configured to store the instructions 2031 and the data 2032. The processor 204 may perform the steps and/or the operations in the method embodiments of this application by reading and executing the instructions 2031 stored in the memory 203. The data 2032 may need to be used in a process of performing the operations and/or the steps in the method embodiments of this application.

Optionally, the communication apparatus may further include the I/O interface 210. The I/O interface 210 is configured to receive instructions and/or data from a peripheral device, and output the instructions and/or data to the peripheral device.

The following describes definitions of some terms in embodiments of this application.

### 1. Frequency domain resource.

The frequency domain resource includes one or more resources in frequency domain, and the plurality of resources may be consecutive or inconsecutive in frequency domain.

In this embodiment of this application, units forming the frequency domain resource are not limited. For example, the unit of the frequency domain resource may be a resource block group (resource block group, RBG). The resource block group is a group of consecutive resource blocks (resource blocks, RBs) in frequency domain, or a unit of the frequency domain resource may be a physical resource block (physical resource block, PRB), or a unit of the frequency domain resource may be a resource block, or another frequency domain resource unit. 2. Downlink information.

The downlink information in embodiments of this application is information, a signal, data, a packet, signaling, or the like sent by the access network device to the terminal device. Alternatively, the downlink information may be a channel carrying the foregoing information, signal, data, packet, or signaling. This is not limited in embodiments of this application.

For example, the downlink information may be a reference signal, for example, a channel state information reference signal (channel state information reference signal, CSI-RS) or a tracking reference signal (tracking reference signal, TRS).

In another example, the downlink information may be a PDSCH, a physical downlink control channel (physical downlink control channel, PDCCH), or another downlink channel.

For another example, the downlink information is information transmitted on a PDSCH, or information transmitted on a PDCCH, or information transmitted on another downlink channel.

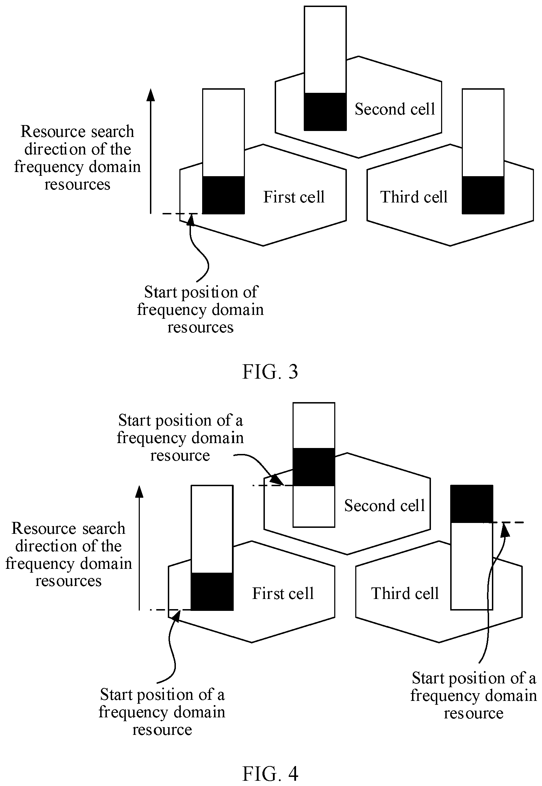

The following describes embodiments of this application with reference to the accompanying drawings. First, FIG. 3 is a schematic diagram of a communication scenario. In FIG. 3, cells managed by an access network device include a first cell, a second cell, and a third cell. The access network device schedules frequency domain resources for PDSCHs of the three cells. FIG. 3 shows an example of start locations of the frequency domain resources allocated (or scheduled) by the access network device to the first cell, the second cell, and the third cell and the frequency domain resources allocated to each cell. As shown in FIG. 3, a dashed line represents the start locations of the frequency domain resources in a resource search direction, that is, the start locations of the frequency domain resources, and a black part represents the frequency domain resources allocated by the access network device to each cell. It can be learned from FIG. 3 that the start locations of the frequency domain resources allocated by the access network device to the first cell, the second cell, and the third cell are the same, and the frequency domain resources allocated to each cell are consecutive in the resource search direction. As a result, PDSCH services of different cells usually interfere with each other.

Because the solution shown in FIG. 3 has a defect of mutual interference between the PDSCH services, a method for randomizing a start location of a frequency domain resource is currently provided. For example, FIG. 4 is a schematic diagram of another communication scenario. In FIG. 4, an example in which the access network device manages the first cell, the second cell, and the third cell is still used. The access network device allocates frequency domain resources to the cell through initialization, and performs allocation based on a physical cell identifier (physical cell id, PCI) of each cell. Specifically, a PCI mod N (mod N) manner is used for allocation, that is, frequency domain resources are allocated based on PCIs of different cells. When PCI mod results are different, start positions of frequency domain resources allocated to the cells are different, where N is a positive integer. For example, in FIG. 4, a start location of a frequency domain resource allocated to the first cell is different from a start location of a frequency domain resource allocated to the second cell and a start location of a frequency domain resource allocated to the third cell. The frequency domain resource of a PDSCH in each cell occupies a part of an available bandwidth of the access network device.

In the solution shown in FIG. 4, only a solution of allocating a PDSCH frequency domain resource is proposed, so that interference between PDSCH services of different cells can be resolved. However, because a reference signal for measuring a channel between the terminal device and the access network device may be distributed on the available bandwidth of the entire access network device, and a frequency domain resource of a PDSCH allocated to each cell is a part of the available bandwidth of the access network device, a measurement result obtained between the terminal device and the access network device based on the reference signal does not match an actual channel (PDSCH) status. Therefore, it is relatively difficult for the terminal device to select an adjusted modulation and coding scheme (modulation and coding scheme, MCS), which causes an increase in bit errors. As a result, an initial block error rate (initial block error rate, IBLER) cannot quickly converge to a target value, and user service experience is affected.

Based on this, an embodiment of this application provides a frequency domain resource configuration method. The access network device configures a first frequency domain resource for a PDSCH, and the first frequency domain resource occupies a part of an available bandwidth of the access network device. The access network device configures a second frequency domain resource for the cell. The second frequency domain resource is a frequency domain resource available to the cell for transmitting downlink information, and occupies a part of the available bandwidth of the access network device. The second frequency domain resource at least partially overlaps the first frequency domain resource. It should be noted that, that the second frequency domain resource at least partially overlaps the first frequency domain resource may also be understood as that the second frequency domain resource is the same as or partially the same as the first frequency domain resource. The access network device configures the second frequency domain resource for the downlink information of the cell. The second frequency domain resource and the first frequency domain resource separately occupy a part of the available bandwidth of the access network device. In other words, both the second frequency domain resource and the first frequency domain resource are narrowband resources. In addition, the second frequency domain resource is the same as or partially the same as the first frequency domain resource. The same may be understood as using a completely same frequency domain resource (a unit of the frequency domain may be a resource block group or another frequency domain resource unit), and the partially the same may be understood as using a partially same frequency domain resource (a unit of the frequency domain resource may be a resource block group or another frequency domain resource unit). Compared with a bandwidth part (bandwidth part, BWP) solution, in this solution, the access network device configures the cell with the second frequency domain resource for transmitting the downlink information without needing the terminal device to report a capability, to expand an application scope of the access network device, and add a type of the terminal device supported by the access network device. When the downlink information is a reference signal, measurement accuracy based on the reference signal can be effectively improved, and a bit error rate can be reduced. When the downlink information is a reference signal or a PDCCH, energy consumption of the terminal device and the access network device can be further effectively reduced.

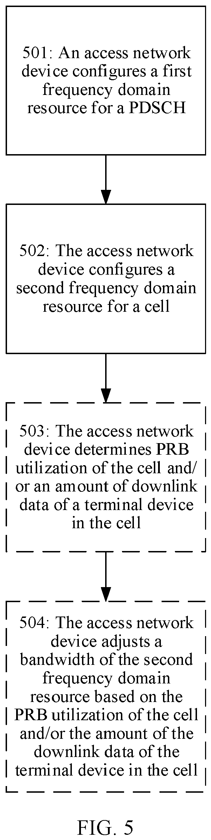

FIG. 5 is a schematic diagram of an embodiment of a frequency domain resource configuration method according to an embodiment of this application. The frequency domain resource configuration method provided in this embodiment of this application includes the following steps. 501: An access network device configures a first frequency domain resource for a PDSCH.

In 501, the access network device configures the first frequency domain resource for the PDSCH in a cell (for example, the first cell, the second cell, or the third cell in FIG. 4) managed or configured by the access network device. The first frequency domain resource is used to transmit data, information, signaling, a packet, or the like on the PDSCH. The first frequency domain resource occupies a part of an available bandwidth of the access network device.

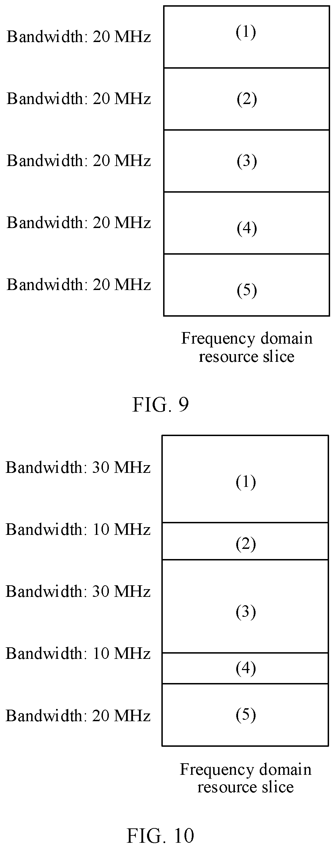

In a possible implementation, the access network device evenly divides the available bandwidth into a plurality of frequency domain resource slices, each frequency domain resource slice occupies a part of the available bandwidth of the access network device, and the first frequency domain resource is one or more of the plurality of frequency domain resource slices. Bandwidths occupied by each frequency domain resource slice are the same. For example, FIG. 9 is a schematic diagram of a frequency domain resource slice according to an embodiment of this application. For example, if the available bandwidth of the access network device is 100 MHz, the access network device divides the available bandwidth into five frequency domain resource slices: a frequency domain resource slice (1), a frequency domain resource slice (2), a frequency domain resource slice (3), a frequency domain resource slice (4), and a frequency domain resource slice (5). Bandwidths occupied by each frequency domain resource slice are basically the same, and each is approximately 20 MHz.

In another possible implementation, the access network device divides the available bandwidth into a plurality of frequency domain resource slices. Bandwidths of the plurality of frequency domain resource slices may be different, and the first frequency domain resource is one or more of the plurality of frequency domain resource slices. For example, FIG. 10 is a schematic diagram of a frequency domain resource slice according to an embodiment of this application. For example, if the available bandwidth of the access network device is 100 MHz, the access network device divides the available bandwidth into five frequency domain resource slices: a frequency domain resource slice (1), a frequency domain resource slice (2), a frequency domain resource slice (3), a frequency domain resource slice (4), and a frequency domain resource slice (5). A bandwidth occupied by the frequency domain resource slice (1) is approximately 30 MHz, a bandwidth occupied by the frequency domain resource slice (2) is approximately 10 MHz, a bandwidth occupied by the frequency domain resource slice (3) is approximately 30 MHz, a bandwidth occupied by the frequency domain resource slice (4) is approximately 10 MHz, and a bandwidth occupied by the frequency domain resource slice (5) is approximately 20 MHz.

Further, the frequency domain resource slice in the foregoing two possible implementations may include consecutive frequency domain resource units, or may include inconsecutive frequency domain resource units. The following separately provides descriptions. The frequency domain resource slice (1) is used as an example. The frequency domain resource unit is a resource block group (RBG). It may be understood that the frequency domain resource unit may alternatively be at another granularity, for example, a resource block (RB). This is not limited herein.

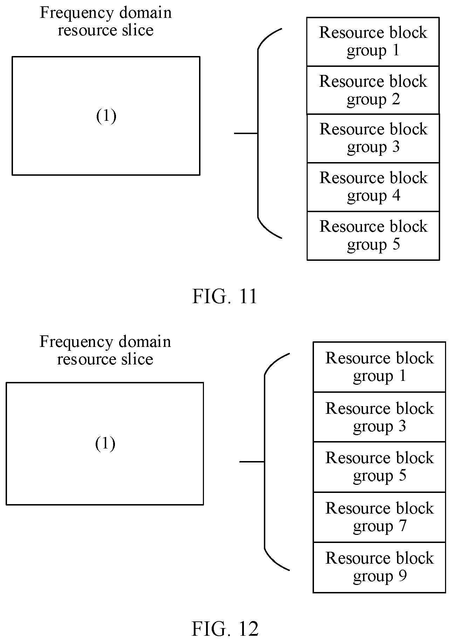

In the following, a frequency domain resource slice including consecutive frequency domain resource units is first described. In an example, FIG. 11 is a schematic diagram of a frequency domain resource slice according to an embodiment of this application. The frequency domain resource slice (1) includes a resource block group 1, a resource block group 2, a resource block group 3, a resource block group 4, and a resource block group 5. The resource block group 1, the resource block group 2, the resource block group 3, the resource block group 4, and the resource block group 5 are five consecutive resource block groups.

In the following, a frequency domain resource slice including consecutive frequency domain resource units is then described. In another example, FIG. 12 is a schematic diagram of a frequency domain resource slice according to an embodiment of this application. The frequency domain resource slice (1) includes a resource block group 1, a resource block group 3, a resource block group 5, a resource block group 7, and a resource block group 9. The resource block group 1, the resource block group 3, the resource block group 5, the resource block group 7, and the resource block group 9 are five inconsecutive resource block groups.

In another example, the frequency domain resource slice (1) is used as an example. The frequency domain resource slice (1) includes a resource block 1, a resource block 2, a resource block 3, a resource block 5, a resource block 7, and a resource block 8.

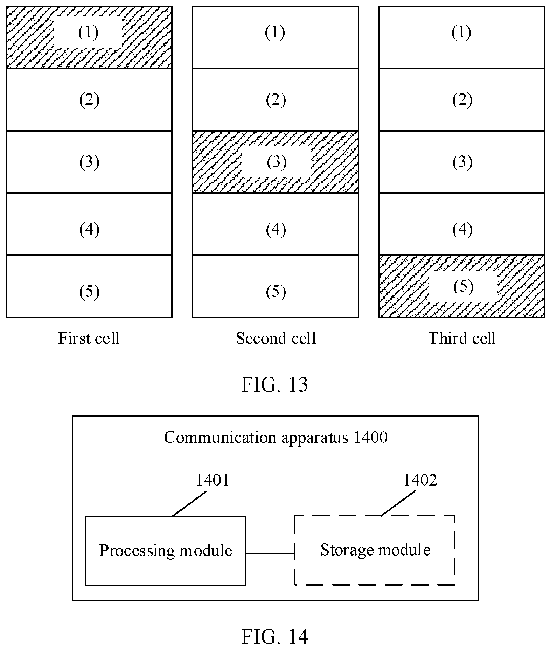

Optionally, the first frequency domain resource is a frequency domain resource determined by the access network device from the available bandwidth of the access network device based on a physical cell identifier PCI corresponding to the cell, and start locations of frequency domain resources of the first frequency domain resource used for transmitting the PDSCH in different cells are different. Specifically, the access network device configures the first frequency domain resource for the PDSCH of the cell. The first frequency domain resource may include the one or more frequency domain resource slices (for details, refer to the foregoing two implementations). In other words, the first frequency domain resource configured for the PDSCH of each cell occupies a part of the available bandwidth of the access network device. The following uses an example in which the first frequency domain resource includes one frequency domain resource slice to describe a specific procedure in which the access network device configures the first frequency domain resource. The access network device allocates the first frequency domain resource of the first cell in a PCI mod 5 (mod 5) manner based on the PCI of the first cell, where the available bandwidth of the access network device is divided into five segments, and allocates corresponding available bandwidth to each cell based on a remainder obtained after the PCI of the different cells is divided by 5 (that is, allocates a corresponding first frequency domain resource to each cell). FIG. 13 is a schematic diagram of a first frequency domain resource. As shown in FIG. 13, for example, the first frequency domain resource of the first cell includes a frequency domain resource slice (1). By analogy, the first frequency domain resource of the second cell includes a frequency domain resource slice (3), and the first frequency domain resource of the third cell includes a frequency domain resource slice (5).

With reference to the example in FIG. 9, the available bandwidth of the access network device is 100 megahertz (megahertz, MHz), and megahertz is briefly referred to as MHz below. In this case, the access network device configures the first frequency domain resource for the PDSCH of the first cell, where a bandwidth of the first frequency domain resource of the first cell is approximately 20 MHz. The access network device configures the first frequency domain resource for the PDSCH of the second cell, where a bandwidth of the first frequency domain resource of the second cell is approximately 20 MHz. The access network device configures the first frequency domain resource for the PDSCH of the third cell, where a bandwidth of the first frequency domain resource of the third cell is approximately 20 MHz.

502: The access network device configures a second frequency domain resource for the cell.

In 502, the access network device configures the second frequency domain resource for the cell, where the second frequency domain resource is a frequency domain resource available to the cell for transmitting the downlink information, the second frequency domain resource occupies a part of the available bandwidth of the access network device, and the second frequency domain resource at least partially overlaps the first frequency domain resource. It should be noted that, that the second frequency domain resource at least partially overlaps the first frequency domain resource may also be understood as that the second frequency domain resource is the same as or partially the same as the first frequency domain resource.

Specifically, the downlink information may be information, a signal, data, a packet, signaling, or the like sent by the access network device to the terminal device. Alternatively, the downlink information may be a channel carrying the foregoing information, signal, data, packet, or signaling. This is not limited in embodiments of this application.

For example, the downlink information may be a reference signal, for example, a channel state information reference signal (channel state information reference signal, CSI-RS) or a tracking reference signal (tracking reference signal, TRS).

In another example, the downlink information may be a PDSCH, a physical downlink control channel (Physical Downlink Control Channel, PDCCH), or another downlink channel.

A specific procedure in which the access network device configures the second frequency domain resource for the cell is similar to that in which the access network device configures the first frequency domain resource for the PDSCH of the cell. The second frequency domain resource may include the one or more frequency domain resource slices. To be specific, the second frequency domain resource configured by the access network device for each cell occupies a part of the available bandwidth of the access network device.

That the second frequency domain resource is the same as or partially the same as the first frequency domain resource means that in a same cell, frequency domain resource slices included in the second frequency domain resource are completely the same as or partially the same as frequency domain resource slices included in the first frequency domain resource of the cell.

The following uses an example in which the second frequency domain resource includes one frequency domain resource slice to describe a specific procedure in which the access network device configures the second frequency domain resource. The access network device allocates the second frequency domain resource of the first cell in a PCI mod N (mod N) manner based on the PCI of the first cell, where N is a positive integer. For example, the second frequency domain resource of the second cell includes a frequency domain resource slice (1). By analogy, the second frequency domain resource of the second cell includes a frequency domain resource slice (3), and the second frequency domain resource of the third cell includes a frequency domain resource slice (5).

In a possible implementation, in a same cell, frequency domain resource slices included in the first frequency domain resource are consistent with frequency domain resource slices included in the second frequency domain resource. For example, the first frequency domain resource of the first cell includes a frequency domain resource slice (1), and the second frequency domain resource of the first cell includes the frequency domain resource slice (1). In other words, in a same cell, a frequency domain resource (the first frequency domain resource) used by the PDSCH is the same as a frequency domain resource (the second frequency domain resource) used for transmitting the downlink information.

In another possible implementation, in a same cell, frequency domain resource slices included in the first frequency domain resource are partially the same as frequency domain resource slices included in the second frequency domain resource. For example, the first frequency domain resource of the first cell includes a frequency domain resource slice (1) and a frequency domain resource slice (2), and the second frequency domain resource of the first cell includes the frequency domain resource slice (1). In other words, in a same cell, a frequency domain resource (the first frequency domain resource) used by the PDSCH is partially the same as a frequency domain resource (the second frequency domain resource) used for transmitting the downlink information. 503: The access network device determines PRB utilization of the cell and/or an amount of downlink data of a terminal device in the cell.

In 503, the access network device determines physical resource block (PRB) utilization of the cell and/or an amount of downlink data of a terminal device in the cell.

First, the PRB utilization of the cell is described. The PRB utilization of the cell may be a quantity of used physical resource blocks in the cell in a period of time divided by a total quantity of physical resource blocks in the cell. The PRB utilization of the cell may be collected in a unit of seconds, for example, the PRB utilization of the cell is collected every 5 seconds or every 10 seconds. The PRB utilization of the cell may alternatively be collected in a unit of minutes, for example, the PRB utilization of the cell is collected every 5 seconds or every 20 minutes. The PRB utilization of the cell may alternatively be collected in a unit of hours, for example, the PRB utilization of the cell is collected every one hour or every three hours. The PRB utilization of the cell may also be collected at another granularity, for example, the PRB utilization of the cell is collected once every day.

Then, the amount of the downlink data of the terminal device in the cell is described. The amount of the downlink data of the terminal device in the cell may be an amount of downlink data of a specific terminal device in the cell, or may be downlink data volumes of a plurality of terminal devices in the cell. The amount of the downlink data of the terminal device may be an amount of data transmitted by the terminal device in the cell in a past period of time, for example, an amount of downlink data that has been sent by the access network device to the terminal device. Alternatively, the amount of the downlink data of the terminal device may be an amount of downlink data that is to be sent by the access network device to the terminal device (or an amount of to-be-scheduled downlink data of the terminal device in the access network device), for example, an amount of downlink data that is to be sent by the access network device to the terminal device in the cell in a future period of time.

It may be understood that the amount of the downlink data may be represented by using a quantity of physical resource blocks. For example, the amount of downlink data that has been sent by the access network device to the terminal device may be understood as a quantity of physical resource blocks used by the terminal device (or a quantity of physical resource blocks that have been used by the terminal device).

For another example, the amount of the downlink data of the terminal device may be PRB utilization of the terminal device in the first cell in the last 10 minutes. Alternatively, the amount of the downlink data of the terminal device may be an amount of to-be-scheduled downlink data of the terminal device in the first cell in the access network device, for example, an amount of to-be-scheduled downlink data of the terminal device in the first cell in the next 10 minutes in the access network device.

For another example, the amount of the downlink data of the terminal device may be PRB utilization of the terminal device in the first cell in the last five seconds. Alternatively, the amount of the downlink data of the terminal device may be an amount of downlink data that is of the terminal device in the first cell and that is to be sent by the access network device to the terminal device in a future period of time, for example, an amount of downlink data that is of the terminal device in the first cell and that is to be sent by the access network device to the terminal device in the next five seconds.

In other words, the amount of the downlink data of the terminal device is downlink-related data of the terminal device in a current cell, data that has been sent by the access network device, or data that has not been sent by the access network device currently.

504: The access network device adjusts a bandwidth of the second frequency domain resource based on the PRB utilization of the cell and/or the amount of the downlink data of the terminal device in the cell.

In 504, the access network device may determine whether to adjust the bandwidth of the second frequency domain resource based on only the PRB utilization of the cell, or the access network device may determine whether to adjust the bandwidth of the second frequency domain resource based on only the amount of the downlink data of the terminal device in the cell. The access network device may further determine whether to adjust the bandwidth of the second frequency domain resource based on the PRB utilization of the cell and the amount of the downlink data of the terminal device in the cell. For example, when either of the PRB utilization of the cell or the amount of the downlink data of the terminal device in the cell meets a condition for adjusting the bandwidth of the second frequency domain resource, the access network device adjusts the bandwidth of the second frequency domain resource. For another example, when both the PRB utilization of the cell and the amount of the downlink data of the terminal device in the cell meet the condition for adjusting the bandwidth of the second frequency domain resource, the access network device adjusts the bandwidth of the second frequency domain resource.

It should be noted that steps 503 and 504 are optional steps.

In this embodiment of this application, the access network device configures the first frequency domain resource for the PDSCH, and the first frequency domain resource occupies a part of the available bandwidth of the access network device. The access network device configures the second frequency domain resource for the cell. The second frequency domain resource is a frequency domain resource available to the cell for transmitting the downlink information, and occupies a part of the available bandwidth of the access network device. The second frequency domain resource is the same as or partially the same as the first frequency domain resource. The access network device configures the second frequency domain resource for the downlink information of the cell. The second frequency domain resource and the first frequency domain resource separately occupy a part of the available bandwidth of the access network device. In other words, both the second frequency domain resource and the first frequency domain resource are narrowband resources. In addition, the second frequency domain resource is the same as or partially the same as the first frequency domain resource. The same may be understood as using a same frequency domain resource, and the partially the same may be understood as using a partially same frequency domain resource. Compared with a bandwidth part (bandwidth part, BWP) solution, in this solution, the access network device configures the cell with the second frequency domain resource for transmitting the downlink information without needing the terminal device to report a capability, to expand an application scope of the access network device, and add a type of the terminal device supported by the access network device. When the downlink information is a reference signal, measurement accuracy based on the reference signal can be effectively improved, and a bit error rate can be reduced. When the downlink information is a reference signal or a PDCCH, energy consumption of the terminal device and the access network device can be further effectively reduced. In addition, the access network device may further dynamically adjust the bandwidth of the second frequency domain resource based on an actual service scenario, to improve downlink information transmission quality while reducing energy consumption of the access network device and the terminal device, and further improve communication quality. When the downlink information is a reference signal, matching between a channel measurement result based on the reference signal and an actual service scenario can be effectively improved, to further improve communication quality.

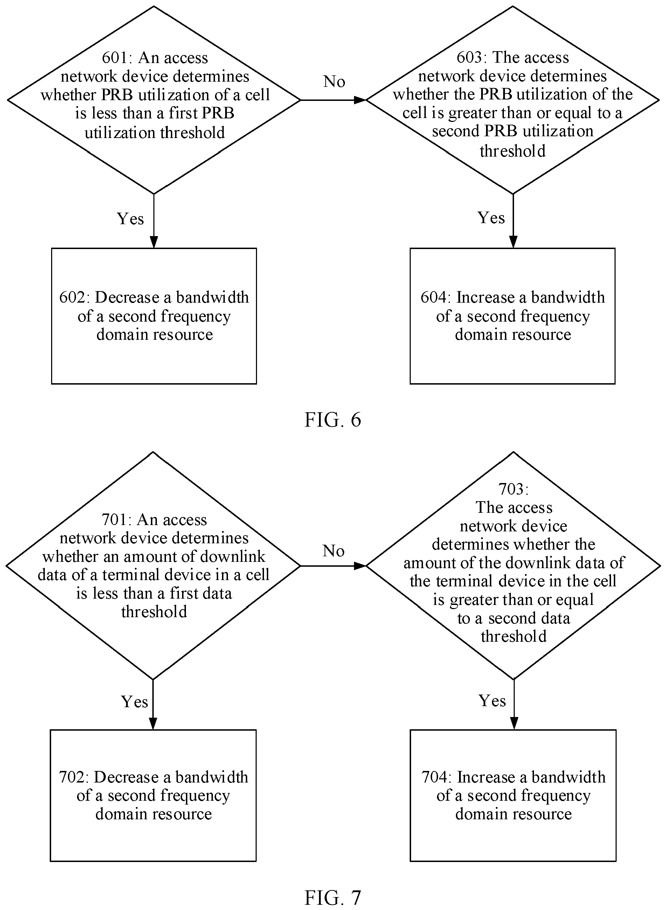

The following describes step 504 in detail. The solution of adjusting the bandwidth of the second frequency domain resource based on the PRB utilization in step 504 is described with reference to FIG. 6, and the solution of adjusting the bandwidth of the second frequency domain resource based on the amount of the downlink data of the terminal device in the cell in step 504 is described with reference to FIG. 7. FIG. 6 is a schematic diagram of another embodiment of a frequency domain resource configuration method according to an embodiment of this application. The frequency domain resource configuration method provided in this embodiment of this application includes the following steps.

601: An access network device determines whether PRB utilization of a cell is less than a first PRB utilization threshold.

In a possible implementation, the access network device determines whether the PRB utilization of the cell is less than the first PRB utilization threshold; and if the PRB utilization of the cell is less than the first PRB utilization threshold, step 602 is performed, or if the PRB utilization of the cell is greater than or equal to the first PRB utilization threshold, step 603 is performed.

In another possible implementation, to prevent the access network device from frequently adjusting the bandwidth of the second frequency domain resource, which affects execution of a normal service, the access network device may further introduce an anti-ping-pong threshold when determining the PRB utilization of the cell. For example, if the PRB utilization of the cell is less than the first PRB utilization threshold, step 602 is performed; if the PRB utilization of the cell is greater than or equal to a sum of the first PRB utilization threshold and a first anti-ping-pong threshold, step 603 is performed; or if the PRB utilization of the cell is greater than the first PRB utilization threshold and less than a sum of the first PRB utilization threshold and the first anti-ping-pong threshold, the access network device does not adjust the bandwidth of the second frequency domain resource.

In a change of the foregoing another possible implementation, if the PRB utilization of the cell is less than or equal to a difference between the first PRB utilization threshold and the first anti-ping-pong threshold, step 602 is performed; if the PRB utilization of the cell is greater than or equal to the first PRB utilization threshold, step 603 is performed; or if the PRB utilization of the cell is greater than a difference between the first PRB utilization threshold and the first anti-ping-pong threshold, and is less than the first PRB utilization threshold, the access network device does not adjust the bandwidth of the second frequency domain resource.

602: Decrease the bandwidth of the second frequency domain resource.

In 602, the access network device decreases the bandwidth of the second frequency domain resource.

Specifically, the bandwidth of the second frequency domain resource is decreased based on the original bandwidth of the second frequency domain resource.

For example, the second frequency domain resource includes a frequency domain resource slice (1) and a frequency domain resource slice (2) before the bandwidth is adjusted. When a preset condition in 601 is met, the access network device decreases the bandwidth of the second frequency domain resource. The adjusted second frequency domain resource includes the frequency domain resource slice (1) or the adjusted second frequency domain resource includes the frequency domain resource slice (2). The access network device transmits the downlink information by using the adjusted second frequency domain resource (that is, the second frequency domain resource whose bandwidth is decreased).

It may be understood that, in step 602, the access network device may adjust the bandwidth of the first frequency domain resource, including but not limited to: adjusting the bandwidth of the first frequency domain resource based on the bandwidth of the second frequency domain resource, or separately adjusting the bandwidth of the first frequency domain resource. A specific condition and method for adjusting the bandwidth of the first frequency domain resource are similar to the condition and method for adjusting the bandwidth of the second frequency domain resource. Details are not described herein again.

603: The access network device determines whether the PRB utilization of the cell is greater than or equal to a second PRB utilization threshold.

In 603, the access network device determines whether the PRB utilization of the cell is greater than or equal to the second PRB utilization threshold; and if the PRB utilization of the cell is greater than or equal to the second PRB utilization threshold, step 604 is performed, or if the PRB utilization of the cell is less than or equal to the second PRB utilization threshold, the access network device does not adjust the bandwidth of the second frequency domain resource.

In another possible implementation, to prevent the access network device from frequently adjusting the bandwidth of the second frequency domain resource, which affects execution of a normal service, the access network device may further introduce an anti-ping-pong threshold when determining the PRB utilization of the cell.

For example, if the PRB utilization of the cell is greater than or equal to a sum of the second PRB utilization threshold and a second anti-ping-pong threshold, step 604 is performed. It may be understood that if it is determined in 601 that the PRB utilization of the cell is greater than or equal to the first PRB utilization threshold, step 603 is performed. When it is determined in 603 that the PRB utilization of the cell is less than the sum of the second PRB utilization threshold and the second anti-ping-pong threshold, the access network device does not adjust the bandwidth of the second frequency domain resource.

604: Increase the bandwidth of the second frequency domain resource.

Specifically, the bandwidth of the second frequency domain resource is increased based on the original bandwidth of the second frequency domain resource.

For example, the second frequency domain resource includes a frequency domain resource slice (1) before the bandwidth is adjusted. When a preset condition in 603 is met, the access network device increases the bandwidth of the second frequency domain resource. The adjusted second frequency domain resource includes the frequency domain resource slice (1) and a frequency domain resource slice (2). The access network device transmits the downlink information by using the adjusted second frequency domain resource (that is, the second frequency domain resource whose bandwidth is increased). In another example, in addition to the frequency domain resource slice (1), the adjusted second frequency domain resource may further include another frequency domain resource slice. For example, the adjusted second frequency domain resource includes the frequency domain resource slice (1), a frequency domain resource slice (3), and the like.

It may be understood that, in step 604, the access network device may adjust the bandwidth of the first frequency domain resource, including but not limited to: adjusting the bandwidth of the first frequency domain resource based on the bandwidth of the second frequency domain resource, or separately adjusting the bandwidth of the first frequency domain resource. A condition and method for adjusting the bandwidth of the first frequency domain resource are similar to the condition and method for adjusting the bandwidth of the second frequency domain resource. Details are not described herein again.

It should be noted that steps 601 to 604 are merely an example of a solution for adjusting the bandwidth of the second frequency domain resource based on the PRB utilization. In another example, the access network device may further first perform step 603, that is, the access network device determines whether the PRB utilization of the cell is greater than or equal to the second PRB utilization threshold, and when the PRB utilization of the cell is greater than or equal to the second PRB utilization threshold, step 604 is performed. When the PRB utilization of the cell is less than the second PRB utilization threshold, step 601 is performed; and the access network device determines whether the PRB utilization of the cell is less than the first PRB utilization threshold, and if the PRB utilization of the cell is less than the first PRB utilization threshold, step 602 is performed.

In another example, the access network device may further simultaneously perform step 601 and step 603, that is, the access network device determines whether the PRB utilization of the cell is less than the first PRB utilization threshold or is greater than or equal to the second PRB utilization threshold. When the PRB utilization of the cell is less than the first PRB utilization threshold, step 602 is performed; or when the PRB utilization of the cell is greater than or equal to the second PRB utilization threshold, step 604 is performed.

With reference to FIG. 7, the following describes a solution of adjusting the bandwidth of the second frequency domain resource based on the amount of the downlink data of the terminal device in the cell in 504. FIG. 7 is a schematic diagram of another embodiment of a frequency domain resource configuration method according to an embodiment of this application. The frequency domain resource configuration method provided in this embodiment of this application includes the following steps.

701: An access network device determines whether an amount of downlink data of a terminal device in a cell is less than a first data threshold.

In a possible implementation, the access network device determines whether the amount of the downlink data of the terminal device in the cell is less than the first data threshold; and if the amount of the downlink data of the terminal device in the cell is less than the first data threshold, step 702 is performed, or if the amount of the downlink data of the terminal device in the cell is greater than or equal to the first data threshold, step 703 is performed.

In another possible implementation, to prevent the access network device from frequently adjusting the bandwidth of the second frequency domain resource, which affects execution of a normal service, the access network device may further introduce an anti-ping-pong threshold when determining the amount of the downlink data of the terminal device in the cell. For example, if the amount of the downlink data of the terminal device in the cell is less than the first data threshold, step 702 is performed; if the amount of the downlink data of the terminal device in the cell is greater than or equal to a sum of the first data threshold and a first anti-ping-pong threshold, step 703 is performed; or if the amount of the downlink data of the terminal device in the cell is greater than the first data threshold and less than a sum of the first data threshold and a first anti-ping-pong threshold, the access network device does not adjust the bandwidth of the second frequency domain resource.

In a change of the foregoing another possible implementation, if the amount of the downlink data of the terminal device in the cell is less than or equal to a difference between the first data threshold and a first anti-ping-pong threshold, step 702 is performed; if the amount of the downlink data of the terminal device in the cell is greater than or equal to the first data threshold, step 703 is performed; or if the amount of the downlink data of the terminal device in the cell is greater than a difference between the first data threshold and a first anti-ping-pong threshold, the access network device does not adjust the bandwidth of the second frequency domain resource.

It may be understood that the access network device determines whether the amount of the downlink data of the terminal device in the cell is less than the first data threshold. The access network device may determine an amount of downlink data of a terminal device in the cell or downlink data volumes of a plurality of terminals in the cell. Specifically, when the access network device determines that the amount of the downlink data of the terminal device in the cell is less than the first data threshold (or another threshold), step 702 is performed. Alternatively, when the access network device determines that a quantity of terminal devices in the cell whose downlink data volumes are less than the first data threshold meets a specific threshold, step 702 is performed. For example, when downlink data volumes of 50% of terminal devices in the cell are less than the first data threshold, step 702 is performed.

702: Decrease the bandwidth of the second frequency domain resource.

In 702, the access network device decreases the bandwidth of the second frequency domain resource.

Specifically, the bandwidth of the second frequency domain resource is decreased based on the original bandwidth of the second frequency domain resource.

For example, the second frequency domain resource includes a frequency domain resource slice (1) and a frequency domain resource slice (2) before the bandwidth is adjusted. When a preset condition in 701 is met, the access network device decreases the bandwidth of the second frequency domain resource. The adjusted second frequency domain resource includes the frequency domain resource slice (1) or the adjusted second frequency domain resource includes the frequency domain resource slice (2). The access network device transmits the downlink information by using the adjusted second frequency domain resource (that is, the second frequency domain resource whose bandwidth is decreased).

It may be understood that, in step 702, the access network device may adjust the bandwidth of the first frequency domain resource, including but not limited to: adjusting the bandwidth of the first frequency domain resource based on the bandwidth of the second frequency domain resource, or separately adjusting the bandwidth of the first frequency domain resource. A specific condition and method for adjusting the bandwidth of the first frequency domain resource are similar to the condition and method for adjusting the bandwidth of the second frequency domain resource. Details are not described herein again.

703: The access network device determines whether the amount of the downlink data of the terminal device in the cell is greater than or equal to a second data threshold.

In step 703, the access network device determines whether the amount of the downlink data of the terminal device in the cell is greater than or equal to the second data threshold. If the amount of the downlink data of the terminal device in the cell is greater than or equal to the second data threshold, step 704 is performed; or if the amount of the downlink data of the terminal device in the cell is less than or equal to the second data threshold, the access network device does not adjust the bandwidth of the second frequency domain resource.

In another possible implementation, to prevent the access network device from frequently adjusting the bandwidth of the second frequency domain resource, which affects execution of a normal service, the access network device may further introduce an anti-ping-pong threshold when determining the amount of the downlink data of the terminal device in the cell.

For example, if the amount of the downlink data of the terminal device in the cell is greater than or equal to a sum of the second data threshold and a second anti-ping-pong threshold, step 704 is performed. It may be understood that if it is determined in 701 that the amount of the downlink data of the terminal device in the cell is greater than or equal to the first data threshold, step 703 is performed. When it is determined in 703 that the amount of the downlink data of the terminal device in the cell is less than a sum of the second data threshold and a second anti-ping-pong threshold, the access network device does not adjust the bandwidth of the second frequency domain resource.

It may be understood that, in the foregoing method, when the access network device determines that an amount of downlink data of any terminal device in the cell is greater than or equal to the second data threshold (or another threshold), step 704 is performed. Alternatively, when the access network device determines that a quantity of terminal devices in the cell whose downlink data volumes are greater than or equal to the second data threshold meets a specific threshold, step 704 is performed. For example, when downlink data volumes of 50% of terminal devices in the cell are greater than the second data threshold, step 704 is performed.

704: Increase the bandwidth of the second frequency domain resource.

Specifically, the bandwidth of the second frequency domain resource is increased based on a frequency domain resource unit originally included in the second frequency domain resource.

For example, the second frequency domain resource includes a frequency domain resource slice (1) before the bandwidth is adjusted. When a preset condition in 703 is met, the access network device increases the bandwidth of the second frequency domain resource. The adjusted second frequency domain resource includes the frequency domain resource slice (1) and a frequency domain resource slice (2). The access network device transmits the downlink information by using the adjusted second frequency domain resource (that is, the second frequency domain resource whose bandwidth is increased). In another example, in addition to the frequency domain resource slice (1), the adjusted second frequency domain resource may further include another frequency domain resource slice. For example, the adjusted second frequency domain resource includes the frequency domain resource slice (1), a frequency domain resource slice (3), and the like.

It may be understood that, in step 704, the access network device may adjust the bandwidth of the first frequency domain resource, including but not limited to: adjusting the bandwidth of the first frequency domain resource based on the bandwidth of the second frequency domain resource, or separately adjusting the bandwidth of the first frequency domain resource. A specific condition and method for adjusting the bandwidth of the first frequency domain resource are similar to the condition and method for adjusting the bandwidth of the second frequency domain resource. Details are not described herein again.

It should be noted that steps 701 to 704 are merely an example of a solution for adjusting the bandwidth of the second frequency domain resource based on the amount of the downlink data of the terminal device in the cell. In another example, the access network device may further first perform step 703. To be specific, the access network device determines whether the amount of the downlink data of the terminal device in the cell is greater than or equal to the second data threshold, and when the amount of the downlink data of the terminal device in the cell is greater than or equal to the second data threshold, step 704 is performed. When the amount of the downlink data of the terminal device in the cell is less than the second data threshold, step 701 is performed. The access network device determines whether the amount of the downlink data of the terminal device in the cell is less than the first data threshold, and if the amount of the downlink data of the terminal device in the cell is less than the first data threshold, step 702 is performed.

In another example, the access network device may further simultaneously perform step 701 and step 703. To be specific, the access network device determines whether the amount of the downlink data of the terminal device in the cell is less than the first data threshold or is greater than or equal to the second data threshold. When the amount of the downlink data of the terminal device in the cell is less than the first data threshold, step 702 is performed; or when the amount of the downlink data of the terminal device in the cell is greater than or equal to the second data threshold, step 704 is performed.

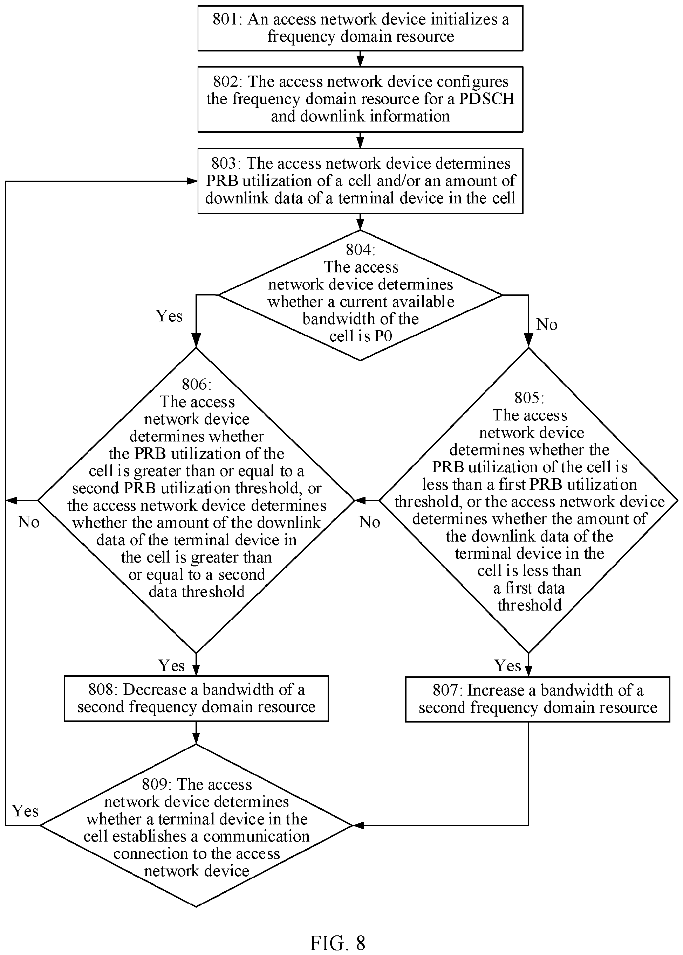

Based on the foregoing embodiments, the following describes an application scenario in this embodiment of this application. Specifically, FIG. 8 is a schematic flowchart of a frequency domain resource configuration method according to an embodiment of this application. The frequency domain resource configuration method provided in this embodiment of this application includes the following steps.

801: An access network device initializes a frequency domain resource.

In 801, the access network device divides an available bandwidth of the access network device into a plurality of frequency domain resource slices. Details are as follows.

In a possible implementation, the access network device evenly divides the available bandwidth into a plurality of frequency domain resource slices, and each frequency domain resource slice occupies a part of the available bandwidth of the access network device. For example, bandwidths occupied by each frequency domain resource slice are the same, for example, as shown in FIG. 9. In another possible implementation, the access network device divides the available bandwidth into a plurality of frequency domain resource slices, and bandwidths of the plurality of frequency domain resource slices may be different, for example, as shown in FIG. 10.

Specifically, for related descriptions of the frequency domain resource, refer to step 501. Details are not described herein again.

802: The access network device configures the frequency domain resource for a PDSCH and downlink information.

In 802, the access network device initializes a first frequency domain resource and a second frequency domain resource of each cell. A specific method for configuring the first frequency domain resource and the second frequency domain resource is similar to the foregoing steps 501 and 502. Details are not described herein again.

803: The access network device determines PRB utilization of a cell and/or an amount of downlink data of the terminal device in the cell.

Step 803 is similar to step 503, and details are not described herein again.

804: The access network device determines whether a current available bandwidth of the cell is P0.

In step 804, the access network device determines whether the current available bandwidth of each cell managed by the access network device is P0, where P0 is a bandwidth greater than 0.

The current available bandwidth of the cell is a bandwidth of an available frequency domain resource allocated by the access network device to the cell. The frequency domain resource slices (1) to (5) shown in FIG. 9 are used as an example. The frequency domain resource allocated by the access network device to the first cell is the frequency domain resource slices (1) to (5), and the frequency domain resource slice (1) is occupied. In this case, the current available bandwidth of the first cell is bandwidths of the frequency domain resource slices (2) to (5).

To ensure that an abundant supply of available frequency domain resources can be provided in the cell, to increase the bandwidth of the second frequency domain resource in the cell, the access network device needs to determine whether the current available bandwidth of the cell is P0. When the current available bandwidth of the cell is P0, it means that the cell managed by the access network device has an abundant supply of available frequency domain resources, and the access network device may increase the bandwidth of the second frequency domain resource of the cell. Specifically, the access network device may determine the current available bandwidth of the cell by detecting whether each frequency domain resource slice allocated to the cell is used.

When the current available bandwidth of the cell is P0, step 806 is performed. In step 806, the access network device determines whether the PRB utilization of the cell is greater than or equal to a second PRB utilization threshold, or the access network device determines whether an amount of downlink data of a terminal device in the cell is greater than or equal to a second data threshold. When the current available bandwidth of the cell is not P0, step 805 is performed. In step 805, the access network device determines whether the PRB utilization of the cell is less than a first PRB utilization threshold, or the access network device determines whether the amount of the downlink data of the terminal device in the cell is less than a first data threshold.

805: The access network device determines whether the PRB utilization of the cell is less than a first PRB utilization threshold, or the access network device determines whether the amount of the downlink data of the terminal device in the cell is less than a first data threshold.

Step 805 is similar to the foregoing steps 603 and 703, and may be mutually referenced.

When the access network device determines that the PRB utilization of the cell is less than the first PRB utilization threshold (or another threshold), or the access network device determines that the amount of the downlink data of the terminal device in the cell is less than the first data threshold (or another threshold), step 807 is performed.

When the access network device determines that the PRB utilization of the cell is greater than or equal to the first PRB utilization threshold (or another threshold), or the access network device determines that the amount of the downlink data of the terminal device in the cell is greater than or equal to the first data threshold (or another threshold), step 806 is performed.

806: The access network device determines whether the PRB utilization of the cell is greater than or equal to a second PRB utilization threshold, or the access network device determines whether the amount of the downlink data of the terminal device in the cell is greater than or equal to a second data threshold.

Step 806 is similar to the foregoing step 601 or 701.

When the access network device determines that the PRB utilization of the cell is greater than the second PRB utilization threshold (or another threshold), or the access network device determines that the amount of the downlink data of the terminal device in the cell is greater than the second data threshold (or another threshold), step 808 is performed.

When the access network device determines that the PRB utilization of the cell is less than or equal to the second PRB utilization threshold (or another threshold), or the access network device determines that the amount of the downlink data of the terminal device in the cell is less than or equal to the second data threshold (or another threshold), step 803 is performed. The access network device re-initializes the PRB utilization of the cell and the amount of the downlink data of the terminal device in the cell.

807: Increase the bandwidth of the second frequency domain resource.

Step 807 is similar to step 604 or 704, and details are not described herein again.

808: Decrease the bandwidth of the second frequency domain resource.

Step 808 is similar to step 602 or 702, and details are not described herein again.

809: The access network device determines whether a terminal device in the cell establishes a communication connection to the access network device.

After step 807 or 808 ends, the access network device may further determine whether a terminal device in the cell establishes a communication connection to the access network device, or whether a terminal device accesses the access network device. If a terminal device establishes a communication connection to the access network device, step 803 is performed, where the access network device re-determines the PRB utilization of the cell and the amount of the downlink data of the terminal device in the cell.

It may be understood that, after step 807 or 808 ends, the access network device may perform step 809 after waiting for a period of time. It should be noted that in the method shown in FIG. 8, the access network device may determine whether to adjust the bandwidth of the second frequency domain resource based on only the PRB utilization of the cell, or the access network device may determine whether to adjust the bandwidth of the second frequency domain resource based on only the amount of the downlink data of the terminal device in the cell. For another example, when both the PRB utilization of the cell and the amount of the downlink data of the terminal device in the cell meet a condition for adjusting the bandwidth of the second frequency domain resource (for example, the PRB utilization of the cell is less than the first PRB utilization threshold and the amount of the downlink data of the cell is less than the first data threshold, or the PRB utilization of the cell is greater than or equal to the second PRB utilization threshold and the amount of the downlink data of the cell is greater than or equal to the second data threshold), the access network device adjusts the bandwidth of the second frequency domain resource. This is not limited herein. It may be understood that, for different downlink information, a difference of adjusting the bandwidth of the second frequency domain resource are the same. For example, when the bandwidth of the second frequency domain resource whose downlink information is a CSI-RS is adjusted from 20 M to 40 M, the bandwidth of the second frequency domain resource whose downlink information is a TRS is adjusted from 20 M to 40 M, and the bandwidth of the second frequency domain resource whose downlink information is a PDCCH is adjusted from 20 M to 40 M.

It may be understood that the bandwidth of the second frequency domain resource is adjusted by using different differences for different downlink information. For example, if the downlink information is a CSI-RS, the bandwidth of the second frequency domain resource is adjusted from 20 M to 40 M. When the downlink information is a TRS, the bandwidth of the second frequency domain resource is adjusted from 20 M to 40 M. The downlink information is a PDCCH, and the bandwidth of the second frequency domain resource is adjusted from 20 M to 80 M.

It should be noted that the method for adjusting the second frequency domain resource may be further used to adjust the first frequency domain resource. In other words, the access network device adjusts the bandwidth of the frequency domain resource of the PDSCH based on the PRB utilization of the cell and/or the amount of the downlink data of the terminal device. Further, after the access network device adjusts the bandwidth of the second frequency domain resource, for example, adjusts the bandwidth of the second frequency domain resource from 20 M to 40 M, the access network device may adjust the bandwidth of the first frequency domain resource from 20 M to 40 M, and the access network device may adjust the bandwidth of the first frequency domain resource from 20 M to 50 M or to all available bandwidths of the access network device (that is, adjust the first frequency domain resource to a full-band resource).

In this embodiment of this application, the access network device configures the first frequency domain resource for the PDSCH, and the first frequency domain resource occupies a part of the available bandwidth of the access network device. The access network device configures the second frequency domain resource for the cell. The second frequency domain resource is a frequency domain resource available to the cell for transmitting the downlink information, and occupies a part of the available bandwidth of the access network device. The second frequency domain resource is the same as or partially the same as the first frequency domain resource. The access network device configures the second frequency domain resource for the downlink information of the cell. The second frequency domain resource and the first frequency domain resource are both a part of the available bandwidth occupied by the access network device. In other words, both the second frequency domain resource and the first frequency domain resource are narrowband resources. In addition, the second frequency domain resource is the same as or partially the same as the first frequency domain resource. The same may be understood as using a same resource block group (or another frequency domain resource unit), and the partially the same may be understood as using a partially same resource block group (or another frequency domain resource unit). Compared with a bandwidth part (bandwidth part, BWP) solution, in this solution, the access network device configures the cell with the second frequency domain resource for transmitting the downlink information without needing the terminal device to report a capability, to expand an application scope of the access network device, and add a type of the terminal device supported by the access network device. When the downlink information is a reference signal, measurement accuracy based on the reference signal can be effectively improved, and a bit error rate can be reduced. When the downlink information is a reference signal, a PDCCH, or a PDSCH, because the downlink information is transmitted between the access network device and the terminal device on a narrowband, energy consumption of the terminal device and the access network device can be further effectively reduced. In addition, the access network device may further dynamically adjust the bandwidth of the second frequency domain resource based on an actual service scenario, to improve downlink information transmission quality while reducing energy consumption of the access network device and the terminal device, and further improve communication quality. When the downlink information is a reference signal, matching between a channel measurement result based on the reference signal and an actual service scenario can be effectively improved, to further improve communication quality.

The foregoing mainly describes the solutions provided in embodiments of this application from the perspective of the methods. It may be understood that, to implement the foregoing functions, a communication apparatus includes corresponding hardware structures and/or software modules for performing the functions. A person of ordinary skill in the art should easily be aware that, in combination with the examples described in embodiments disclosed in this specification, modules, algorithms and steps in this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method examples. For example, each functional module may be obtained through division based on each function, or two or more functions may be integrated into one transceiver module. The integrated module may be implemented in a form of hardware, or may be implemented in a form of a software functional module. It should be noted that, in embodiments of this application, module division is an example, and is merely a logical function division. In actual implementation, another division manner may be used.

The following describes in detail a communication apparatus in this application. FIG. 14 is a schematic diagram of an embodiment of a communication apparatus according to an embodiment of this application. The communication apparatus may be further deployed in an access network device, a chip, or a chip system. The communication apparatus 1400 includes a processing module 1401 and a storage module 1402. The storage module 1402 is configured to store software code executed by the processing module 1401. The storage module 1402 is further configured to store an execution result of executing the software code by the processing module 1401.

The processing module 1401 is configured to configure a first frequency domain resource for a physical downlink shared channel PDSCH of a cell, where the first frequency domain resource occupies a part of an available bandwidth of an access network device.

The processing module 1401 is further configured to configure a second frequency domain resource for the cell, where the second frequency domain resource is a frequency domain resource available to the cell for transmitting downlink information, and occupies a part of the available bandwidth of the access network device, and the second frequency domain resource at least partially overlaps the first frequency domain resource.

In another example, the communication apparatus 1400 includes:
a processing module 1401, configured to configure a first frequency domain resource for a physical downlink shared channel PDSCH of a cell, where the first frequency domain resource occupies a part of an available bandwidth of an access network device.

The processing module 1401 is further configured to configure a second frequency domain resource for the cell, where the second frequency domain resource is a frequency domain resource available to the cell for transmitting downlink information, and occupies a part of the available bandwidth of the access network device, and the second frequency domain resource at least partially overlaps the first frequency domain resource

The processing module 1401 is further configured to adjust a bandwidth of the second frequency domain resource based on physical resource block utilization of the cell and/or an amount of downlink data of a terminal device in the cell.

In a possible implementation, the processing module 1401 is further configured to perform the method described in the foregoing method embodiment, for example, steps 501 to 504, steps 601 to 604, steps 701 to 704, and/or steps 801 to 809. Details are not described herein again.

The communication apparatus in the foregoing embodiment may be an access network device, or may be a chip applied to an access network device, or another combined component, component, or the like that can implement a function of the access network device. When the communication apparatus is an access network device, the transceiver module may be a transceiver. The transceiver may include an antenna, a radio frequency circuit, and the like. The processing module may be a processor, for example, a baseband chip. When the communication apparatus is a component having a function of the foregoing access network device, the transceiver module may be a radio frequency unit, and the processing module may be a processor. When the communication apparatus is a chip system, the transceiver module may be an input interface of the chip system or the transceiver module may be an output interface of the chip system, and the processing module may be a processor of the chip system, for example, a central processing unit (central processing unit, CPU).

It should be noted that content such as information exchange and an execution process between modules/or components of the communication apparatus is based on a same concept as the method embodiments corresponding to FIG. 5 to FIG. 8 in this application. For specific content, refer to the descriptions in the foregoing method embodiments of this application. Details are not described herein again.

It should be noted that for specific implementations of the communication apparatus and beneficial effects brought by the communication apparatus, refer to descriptions in the method embodiments corresponding to FIG. 5 to FIG. 8. Details are not described herein again.

An embodiment of this application further provides a processing apparatus. The processing apparatus includes a processor and an interface. The processor is configured to perform the method in any one of the foregoing method embodiments.

It should be understood that the processing apparatus may be a chip. The processor may be implemented by using hardware or software. When the processor is implemented by hardware, the processor may be a logic circuit, an integrated circuit, or the like. When the processor is implemented by software, the processor may be a general-purpose processor, and is implemented by reading software code stored in a memory. The memory may be integrated into the processor, or may be located outside the processor and exist independently.

Herein, "implemented by hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an application-specific integrated circuit (application-specific integrated circuit, ASIC) or a programmable logic device (programmable logic device, PLD). The PLD may further include a field programmable gate array (field programmable gate array, FPGA), a complex programmable logic device (complex programmable logic device, CPLD), and the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as a system-on-a-programmable-chip (system-on-a-programmable-chip, SoPC).

This application further provides a communication system, including a terminal device and an access network device.

An embodiment of this application further provides a computer-readable storage medium, including instructions. When the instructions are sun on a computer, the computer controls an access network device to perform any one of the implementations shown in the foregoing method embodiments.

An embodiment of this application further provides a computer program product. The computer program product includes computer program code. When the computer program code is run on a computer, the computer performs any one of the implementations shown in the foregoing method embodiments.

An embodiment of this application further provides a chip system, including a memory and a processor. The memory is configured to store a computer program, and the processor is configured to invoke the computer program from the memory and run the computer program, so that a chip performs any one of the implementations shown in the foregoing method embodiments.

An embodiment of this application further provides a chip system, including a processor. The processor is configured to invoke and run a computer program, so that a chip performs any one of the implementations shown in the foregoing method embodiments.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a computer floppy disk, a USB flash drive, a removable hard disk drive, a ROM, a RAM, a magnetic disk, or an optical disc, and includes several instructions for instructing a computer device to perform the methods described in embodiments of this application.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a communication apparatus or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all the units may be selected according to actual needs to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or an access network device) to perform all or some of the steps of the methods described in embodiments of this application.

## Claims

1. A frequency domain resource configuration method, wherein the method comprises:
configuring, by an access network device, a first frequency domain resource for a physical downlink shared channel PDSCH of a cell, wherein the first frequency domain resource occupies a part of an available bandwidth of the access network device;
configuring, by the access network device, a second frequency domain resource for the cell, wherein the second frequency domain resource is a frequency domain resource available to the cell for transmitting downlink information, and occupies a part of the available bandwidth of the access network device, and the second frequency domain resource at least partially overlaps the first frequency domain resource; and
adjusting, by the access network device, a bandwidth of the second frequency domain resource based on physical resource block utilization of the cell and/or an amount of downlink data of a terminal device in the cell.

2. The method according to claim 1, wherein the downlink information comprises one or more of the following: a channel state information reference signal CSI-RS, a tracking reference signal TRS, or a physical downlink control channel PDCCH.

3. The method according to either of claims 1 and 2, wherein the amount of the downlink data of the terminal device comprises:
an amount of downlink data that has been sent by the access network device to the terminal device, and/or an amount of downlink data that is to be sent by the access network device to the terminal device.

4. The method according to any one of claims 1 to 3, wherein the adjusting, by the access network device, a bandwidth of the second frequency domain resource based on physical resource block utilization of the cell and/or an amount of downlink data of a terminal device in the cell comprises:
if the physical resource block utilization of the cell is less than a first physical resource block utilization threshold, decreasing, by the access network device, the bandwidth of the second frequency domain resource.

5. The method according to any one of claims 1 to 4, wherein the adjusting, by the access network device, a bandwidth of the second frequency domain resource based on physical resource block utilization of the cell and/or an amount of downlink data of a terminal device in the cell comprises:
if the physical resource block utilization of the cell is greater than or equal to a second physical resource block utilization threshold, increasing, by the access network device, the bandwidth of the second frequency domain resource.

6. The method according to any one of claims 1 to 5, wherein the adjusting, by the access network device, a bandwidth of the second frequency domain resource based on physical resource block utilization of the cell and/or an amount of downlink data of a terminal device in the cell comprises:
if the amount of the downlink data of the terminal device in the cell is less than a first data threshold, decreasing, by the access network device, the bandwidth of the second frequency domain resource.

7. The method according to any one of claims 1 to 6, wherein the adjusting, by the access network device, a bandwidth of the second frequency domain resource based on physical resource block utilization of the cell and/or an amount of downlink data of a terminal device in the cell comprises:
if the amount of the downlink data of the terminal device in the cell is greater than or equal to a second data threshold, increasing, by the access network device, the bandwidth of the second frequency domain resource.

8. The method according to any one of claims 1 to 7, wherein
the first frequency domain resource is a frequency domain resource determined by the access network device based on a physical cell identifier PCI corresponding to the cell.

9. The method according to any one of claims 1 to 8, wherein the cell is a first cell, and the method further comprises:
configuring, by the access network device, a second frequency domain resource for a second cell, wherein the second frequency domain resource of the second cell is a frequency domain resource available to the second cell for transmitting the downlink information, and occupies a part of the available bandwidth of the access network device, and the second frequency domain resource of the second cell does not overlap the second frequency domain resource of the first cell.

10. The method according to any one of claims 1 to 9, wherein the first frequency domain resource is inconsecutive, and/or the second frequency domain resource is inconsecutive.

11. The method according to any one of claims 1 to 9, wherein
the first frequency domain resource is consecutive, and/or the second frequency domain resource is consecutive.

12. A communication apparatus, applied to an access network device, comprising:
at least one processor; and
a memory and a communication interface that are communicatively connected to the at least one processor, wherein
the memory stores instructions executable by the at least one processor, and the at least one processor executes the instructions stored in the memory, to perform the method according to any one of claims 1 to 11.

13. A computer-readable storage medium, wherein the computer-readable storage medium stores a computer program (instructions), and when the program (instructions) is/are executed by a processor, the method according to any one of claims 1 to 11 is implemented.

14. A chip system, wherein the chip system comprises at least one processor, the processor is configured to execute a computer program or instructions, and when the computer program or the instructions is/are executed in the at least one processor, the method according to any one of claims 1 to 11 is implemented.

15. A chip, wherein the chip is configured to execute a computer program or instructions, and when the computer program or the instructions is/are executed in the chip, the method according to any one of claims 1 to 11 is implemented.

16. A computer program product, comprising instructions, wherein when the instructions are run on a computer, the computer is enabled to perform the method according to any one of claims 1 to 11.
